# EUROPEAN PATENT APPLICATION

(11) **EP 4 580 224 A1**
(43) Date of publication of application: **02.07.2025**
(21) Application number: 23220294.5
(22) Date of filing: 27.12.2023
(51) Int. Cl.: H04W 4/48, H04L 67/51, H04L 67/561

(54) **METHODS AND DEVICES FOR IN-VEHICLE INTELLIGENT TRANSPORTATION SYSTEMS**

(71) Applicant: INTEL Corporation, Santa Clara, CA 95054 (US)
(72) Inventor: ROMAN, John, Hillsboro, OR 97124 (US); MUECK, Markus Dominik, Unterhaching (DE)
(74) Representative: Viering, Jentschura & Partner mbB Patent- und Rechtsanwälte

(57) **Abstract**

A device for a vehicle, the device may include a processor configured to: identify information representative of a plurality of services provided by a mobile communication device; select one or more services from the plurality of services provided by the mobile communication device; obtain data of the one or more services received from the mobile communication device; and instruct an intelligent transportation system (ITS) of the vehicle to use the data of the one or more services.

## Description

### Technical Field

This disclosure generally relates to methods and devices for intelligent transportation systems.

### Background

Intelligent transportation systems (ITS) may provide various services associated with vehicular technology, integrating communication, computing, and sensing capabilities into vehicles to enhance the safety, efficiency, and sustainability of transportation networks. An ITS system of a vehicle may include a network of sensors, processors, and communication systems to enable real-time data collection and analysis by utilizing various technologies such as Global Positioning System (GPS), radar, Light Detection and Ranging (LIDAR), cameras, and ultrasonic sensors to monitor the surroundings of the vehicle and road conditions, and detect obstacles or potential hazards.

Moreover, ITS may rely on data communication, illustratively between the vehicle and other vehicles, infrastructure, and other devices via vehicle-to-vehicle (V2V) and vehicle-to-everything (V2X) communication, which may allow the vehicles and other traffic-infrastructure related entities to exchange critical information in real time, such as traffic conditions, weather updates, potential hazards, etc. for a cooperative and interconnected transportation network.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
FIG. 1 shows an exemplary vehicle and a mobility system.
FIG. 2 shows an exemplary control system of the vehicle.
FIG. 3 shows an illustrative example of a device.
FIG. 4 shows an illustrative example of a system including the device.
FIG. 5 shows an example of a controller.
FIG. 6 shows an exemplary illustration of routing of data received from a mobile communication device.
FIG. 7 shows an example of a flow diagram.
FIG. 8 shows an example of a flow diagram.
FIG. 9 shows an example of a method.

### Description

The following detailed description refers to the accompanying drawings that show, by way of illustration, exemplary details and aspects in which aspects of the present disclosure may be practiced.

As used herein, "communication device" (e.g. a mobile communication device) may refer to any type of electronic devices that are able to exchange information with at least another device, for example according to various types of radio communication technologies and using various types of communication protocols as exemplarily provided herein. Exemplarily, a communication device may be, or may include, an access point, a station, any types of user devices which may include a suitable device including a processor, that may include, a mobile device or a non-mobile device, a user equipment (UE), a computing device, such as a personal computer (PC), a desktop computer, a mobile computer, a laptop computer, a notebook computer, a tablet computer, a server, a handheld computing device, a wearable device, such as a smart bracelet, a smart watch, smart glasses, a smart ring, etc., an internet of things (IoT) device, a sensor, a mobile phone, a cellular telephone, any types of wireless accessories, such as a headphone, a headset, a microphone, a speaker, a domotics (smart home) device, a docking station, a medical device, an endoscope, a surgical robot, a hearing aid, a cochlear implant device or a system, a Bluetooth medical device, an audio communication device, a headset, a headphone, an earphone, an earbud, a true wireless earphone, a wireless speaker, an in-vehicle device, or a device for vehicles, etc.

The apparatuses and methods of this disclosure may utilize or be related to radio communication technologies. While some examples may refer to specific radio communication technologies, the examples provided herein may be similarly applied to various other radio communication technologies, both existing and not yet formulated, particularly in cases where such radio communication technologies share similar features as disclosed regarding the following examples.

Various exemplary radio communication technologies that the apparatuses and methods described herein may utilize include, but are not limited to: Any of the radio links described herein may operate according to any one or more of the following radio communication technologies and/or standards including but not limited to: a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology, for example Universal Mobile Telecommunications System (UMTS), Freedom of Multimedia Access (FOMA), 3GPP Long Term Evolution (LTE), 3GPP Long Term Evolution Advanced (LTE Advanced), Code division multiple access 2000 (CDMA2000), Cellular Digital Packet Data (CDPD), Mobitex, Third Generation (3G), Circuit Switched Data (CSD), High-Speed Circuit-Switched Data (HSCSD), Universal Mobile Telecommunications System (Third Generation) (UMTS (3G)), Wideband Code Division Multiple Access (Universal Mobile Telecommunications System) (W-CDMA (UMTS)), High Speed Packet Access (HSPA), High-Speed Downlink Packet Access (HSDPA), High-Speed Uplink Packet Access (HSUPA), High Speed Packet Access Plus (HSPA+), Universal Mobile Telecommunications System-Time-Division Duplex (UMTS-TDD), Time Division-Code Division Multiple Access (TD-CDMA), Time Division-Synchronous Code Division Multiple Access (TD-CDMA), 3rd Generation Partnership Project Release 8 (Pre-4th Generation) (3GPP Rel. 8 (Pre-4G)), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP Rel. 19 (3rd Generation Partnership Project Release 19) and subsequent Releases (such as Rel. 20, Rel. 21, etc.), 3GPP 5G, 5G, 3GPP 6G, 6G, 6^{th} Generation Cellular Networks, 5G New Radio (5GNR), 3GPP 5G New Radio, 3GPP LTE Extra, LTE-Advanced Pro, LTE Licensed-Assisted Access (LAA), MuLTEfire, UMTS Terrestrial Radio Access (UTRA), Evolved UMTS Terrestrial Radio Access (E-UTRA), Long Term Evolution Advanced (4th Generation) (LTE Advanced (4G)), cdmaOne (2G), Code division multiple access 2000 (Third generation) (CDMA2000 (3G)), Evolution-Data Optimized or Evolution-Data Only (EV-DO), Advanced Mobile Phone System (1st Generation) (AMPS (1G)), Total Access Communication System/Extended Total Access Communication System (TACS/ETACS), Digital AMPS (2nd Generation) (D-AMPS (2G)), Push-to-talk (PTT), Mobile Telephone System (MTS), Improved Mobile Telephone System (IMTS), Advanced Mobile Telephone System (AMTS), OLT (Norwegian for Offentlig Landmobil Telefoni, Public Land Mobile Telephony), MTD (Swedish abbreviation for Mobiltelefonisystem D, or Mobile telephony system D), Public Automated Land Mobile (Autotel/PALM), ARP (Finnish for Autoradiopuhelin, "car radio phone"), NMT (Nordic Mobile Telephony), High capacity version of NTT (Nippon Telegraph and Telephone) (Hicap), Cellular Digital Packet Data (CDPD), Mobitex, DataTAC, Integrated Digital Enhanced Network (iDEN), Personal Digital Cellular (PDC), Circuit Switched Data (CSD), Personal Handy-phone System (PHS), Wideband Integrated Digital Enhanced Network (WiDEN), iBurst, Unlicensed Mobile Access (UMA), also referred to as also referred to as 3GPP Generic Access Network, or GAN standard), Zigbee, Bluetooth(r), Radio Local Area Networks (RLAN), Wi-Fi (based on IEEE802.11 and/or IEEE 802.11b (Wi-Fi 1) and/or IEEE 802.11a (Wi-Fi 2) and/or IEEE 802.11g (Wi-Fi 3) and/or 802.11n (Wi-Fi 4) and/or IEEE 802.1 1ac (Wi-Fi 5) and/or IEEE 802.1 1ax (Wi-Fi 6) and/or IEEE802.1 1be (Wi-Fi 7) and/or any follow-up WiFi related technology), Wireless Gigabit Alliance (WiGig) standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p or IEEE 802.11bd and other) Vehicle-to-Vehicle (V2V) and Vehicle-to-X (V2X) and Vehicle-to-Infrastructure (V2I) and Infrastructure-to-Vehicle (I2V) communication technologies, 3GPP cellular V2X, DSRC (Dedicated Short Range Communications) communication systems such as Intelligent-Transport-Systems and others (typically operating in 5850 MHz to 5925 MHz or above (typically up to 5935 MHz following change proposals in CEPT Report 71)), the European ITS-G5 system (i.e. the European flavor of IEEE 802.11p based DSRC, including ITS-G5A (i.e., Operation of ITS-G5 in European ITS frequency bands dedicated to ITS for safety related applications in the frequency range 5,875 GHz to 5,905 GHz), ITS-G5B (i.e., Operation in European ITS frequency bands dedicated to ITS non- safety applications in the frequency range 5,855 GHz to 5,875 GHz), ITS-G5C (i.e., Operation of ITS applications in the frequency range 5,470 GHz to 5,725 GHz)), DSRC in Japan in the 700MHz band (including 715 MHz to 725 MHz), IEEE 802.11bd based systems, etc.

Aspects described herein can be used in the context of any spectrum management scheme including dedicated licensed spectrum, unlicensed spectrum, license exempt spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System / CBRS = Citizen Broadband Radio System in 3.55-3.7 GHz and further frequencies). Applicable spectrum bands include IMT (International Mobile Telecommunications) spectrum as well as other types of spectrum/bands, such as bands with national allocation (including 450 - 470 MHz, 902-928 MHz (note: allocated for example in US (FCC Part 15)), 863-868.6 MHz (note: allocated for example in European Union (ETSI EN 300 220)), 915.9-929.7 MHz (note: allocated for example in Japan), 917-923.5 MHz (note: allocated for example in South Korea), 755-779 MHz and 779-787 MHz (note: allocated for example in China), 790 - 960 MHz, 1710 - 2025 MHz, 2110 - 2200 MHz, 2300 - 2400 MHz, 2.4-2.4835 GHz (note: it is an ISM band with global availability and it is used by Wi-Fi technology family (11b/g/n/ax) and also by Bluetooth), 2500 - 2690 MHz, 698-790 MHz, 610 - 790 MHz, 3400 - 3600 MHz, 3400 - 3800 MHz, 3800 - 4200 MHz, 3.55-3.7 GHz (note: allocated for example in the US for Citizen Broadband Radio Service), 5.15-5.25 GHz and 5.25-5.35 GHz and 5.47-5.725 GHz and 5.725-5.85 GHz bands (note: allocated for example in the US (FCC part 15), consists four U-NII bands in total 500 MHz spectrum), 5.725-5.875 GHz (note: allocated for example in EU (ETSI EN 301 893)), 5.47-5.65 GHz (note: allocated for example in South Korea, 5925-7125 MHz and 5925-6425MHz band (note: under consideration in US and EU, respectively. Next generation Wi-Fi system is expected to include the 6 GHz spectrum as operating band but it is noted that, as of December 2017, Wi-Fi system is not yet allowed in this band. Regulation is expected to be finished in 2019-2020 time frame), IMT-advanced spectrum, IMT-2020 spectrum (expected to include 3600-3800 MHz, 3800 - 4200 MHz, 3.5 GHz bands, 700 MHz bands, bands within the 24.25-86 GHz range, etc.), spectrum made available under FCC's "Spectrum Frontier" 5G initiative (including 27.5 - 28.35 GHz, 29.1 - 29.25 GHz, 31 - 31.3 GHz, 37 - 38.6 GHz, 38.6 - 40 GHz, 42 - 42.5 GHz, 57 - 64 GHz, 71 - 76 GHz, 81 - 86 GHz and 92 - 94 GHz, etc), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), 57-64/66 GHz (note: this band has near-global designation for Multi-Gigabit Wireless Systems (MGWS)/WiGig. In US (FCC part 15) allocates total 14 GHz spectrum, while EU (ETSI EN 302 567 and ETSI EN 301 217-2 for fixed P2P) allocates total 9 GHz spectrum), the 70.2 GHz - 71 GHz band, any band between 65.88 GHz and 71 GHz, bands currently allocated to automotive radar applications such as 76-81 GHz, and future bands including 94-300 GHz and above. Furthermore, the scheme can be used on a secondary basis on bands such as the TV White Space bands (typically below 790 MHz) where in particular the 400 MHz and 700 MHz bands are promising candidates. Besides cellular applications, specific applications for vertical markets may be addressed such as PMSE (Program Making and Special Events), medical, health, surgery, automotive, low-latency, drones, etc. applications.

Aspects described herein can also implement a hierarchical application of the scheme is possible, e.g. by introducing a hierarchical prioritization of usage for different types of users (e.g., low/medium/high priority, etc.), based on a prioritized access to the spectrum e.g. with highest priority to tier-1 users, followed by tier-2, then tier-3, etc. users, etc.

Aspects described herein can also be applied to different Single Carrier or OFDM flavors (CP-OFDM, SC-FDMA, SC-OFDM, filter bank-based multicarrier (FBMC), OFDMA, etc.) and in particular 3GPP NR (New Radio) by allocating the OFDM carrier data bit vectors to the corresponding symbol resources.].

Some of the features in this document are defined for the network side, such as Access Points, eNodeBs, New Radio (NR) or next generation Node Bs (gNodeB or gNB - note that this term is typically used in the context of 3GPP fifth generation (5G) communication systems), etc. Still, a User Equipment (UE) may take this role as well and act as an Access Points, eNodeBs, gNodeBs, etc. I.e., some or all features defined for network equipment may be implemented by a UE.

For purposes of this disclosure, radio communication technologies may be classified as one of a Short Range radio communication technology or Cellular Wide Area radio communication technology. Short Range radio communication technologies may include Bluetooth, WLAN (e.g., according to any IEEE 802.11 standard), and other similar radio communication technologies including Wireless Personal Area Network (WPAN) standards (e.g., according to any IEEE 802.15 standard), Wi-Fi Direct, Cellular Wide Area radio communication technologies may include Global System for Mobile Communications ("GSM"), Code Division Multiple Access 2000 ("CDMA2000"), Universal Mobile Telecommunications System ("UMTS"), Long Term Evolution ("LTE"), General Packet Radio Service ("GPRS"), Evolution-Data Optimized ("EV-DO"), Enhanced Data Rates for GSM Evolution ("EDGE"), High Speed Packet Access (HSPA; including High Speed Downlink Packet Access ("HSDPA"), High Speed Uplink Packet Access ("HSUPA"), HSDPA Plus ("HSDPA+"), and HSUPA Plus ("HSUPA+")), Worldwide Interoperability for Microwave Access ("WiMax") (e.g., according to an IEEE 802.16 radio communication standard, e.g., WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

Bluetooth (BT) technology may use frequencies between 2.402 and 2.480 GHz, or 2.400 and 2.4835 GHz including guard bands 2 MHz wide at the bottom end and 3.5 MHz wide at the top, according to frequency-hopping spread spectrum. A communication device operating according to a Bluetooth protocol may divide data to be transmitted into packets, and transmit each packet into a channel designated for the use (e.g. of bandwidth of 1 MHz for classic Bluetooth and 2 MHz for Bluetooth Low Energy (BLE)). A communication device configured to operate according to a Bluetooth protocol may operate in a basic rate (BR) mode using a Gaussian frequency-shift keying (GFSK) modulation, and/or operate in an enhanced data rate (EDR) mode, that is considered to provide a faster data rate and lower power consumption, using a differential phase-shift keying (DPSK) (e.g. 8-DPSK) and/or differential quadrature phase-shift keying (DQPSK) (e.g. π/4-DQPSK) based on the quality of the communication channel. A communication device configured to operate according to a Bluetooth protocol may operate according to the Bluetooth Low Energy (BLE) technology that is integrated within the Bluetooth standard starting from v4.0, which operates within the same frequency spectrum, using GFSK modulation.

Wi-Fi Direct technology, which may also be referred to as Wi-Fi P2P, may be one of the exemplary technologies used with respect to peer-to-peer connections provided in this disclosure. Peer-to-peer connections may refer to point-to-point connections between two communication devices according to a peer-to-peer communication protocol. Within a peer-to-peer network, communication devices (two or more) may communicate with each other over the P2P connections established between them. A Wi-Fi Direct connection may allow communication devices to communicate over an established Wi-Fi Direct connection without an intermediary entity such as an access point or a router. Wi-Fi Direct technology allows for forming a P2P network by forming a P2P group in which a communication device may take the role of a Group Owner (GO) or a Group Client (GC).

In accordance with various aspects of this disclosure, a communication device may communicate with at least one further communication device. In some aspects, a short-range wireless communication device may communicate with at least one further short-range wireless communication device over an established short-range wireless communication link. The short-range wireless communication device may have connections that are established with multiple short-range wireless communication devices simultaneously. Various aspects provided herein may include examples in which short-range wireless communication is Bluetooth (BT) communication and accordingly in respective aspects, a short-range wireless connection may include BT connections. Operations may include BT communication in a BR/EDR mode or in a BLE mode.

A "vehicle" may be understood to include any type of driven or drivable object. By way of example, a vehicle may be a driven object with a combustion engine, a reaction engine, an electrically driven object, a hybrid driven object, or a combination thereof. A vehicle may be or may include an automobile, a bus, a mini bus, a van, a truck, a mobile home, a vehicle trailer, a motorcycle, a bicycle, a tricycle, a train locomotive, a train wagon, a moving robot, a personal transporter, a boat, a ship, a submersible, a submarine, a drone, an aircraft, a rocket, and the like.

A "ground vehicle" may be understood to include any type of vehicle, as described above, which is configured to traverse or be driven on the ground, e.g., on a street, on a road, on a track, on one or more rails, off-road, etc. An "aerial vehicle" may be understood to be any type of vehicle, as described above, which is capable of being maneuvered above the ground for any duration of time, e.g., a drone. Accordingly, similar to a ground vehicle having wheels, belts, etc., for providing mobility on terrain, an "aerial vehicle" may have one or more propellers, wings, fans, among others, for providing the ability to maneuver in the air. An "aquatic vehicle" may be understood to be any type of vehicle, as described above, which is capable of being maneuvered on or below the surface of liquid, e.g., a boat on the surface of water or a submarine below the surface. It is appreciated that some vehicles may be configured to operate as one of more of a ground, an aerial, and/or an aquatic vehicle.

The term "autonomous vehicle" may describe a vehicle capable of implementing at least one navigational change without driver input. A navigational change may describe or include a change in one or more of steering, braking, or acceleration/deceleration of the vehicle. A vehicle may be described as autonomous even in case the vehicle is not fully automatic (for example, fully operational with driver or without driver input). Autonomous vehicles may include those vehicles that can operate under driver control during certain time periods and without driver control during other time periods. Autonomous vehicles may also include vehicles that control only some aspects of vehicle navigation, such as steering (e.g., to maintain a vehicle course between vehicle lane constraints) or some steering operations under certain circumstances (but not under all circumstances), but may leave other aspects of vehicle navigation to the driver (e.g., braking or braking under certain circumstances). Autonomous vehicles may also include vehicles that share the control of one or more aspects of vehicle navigation under certain circumstances (e.g., hands-on, such as responsive to a driver input) and vehicles that control one or more aspects of vehicle navigation under certain circumstances (e.g., hands-off, such as independent of driver input). Autonomous vehicles may also include vehicles that control one or more aspects of vehicle navigation under certain circumstances, such as under certain environmental conditions (e.g., spatial areas, roadway conditions). In some aspects, autonomous vehicles may handle some or all aspects of braking, speed control, velocity control, and/or steering of the vehicle. An autonomous vehicle may include those vehicles that can operate without a driver. The level of autonomy of a vehicle may be described or determined by the Society of Automotive Engineers (SAE) level of the vehicle (e.g., as defined by the SAE, for example in SAE J3016 2018: Taxonomy and definitions for terms related to driving automation systems for on road motor vehicles) or by other relevant professional organizations. The SAE level may have a value ranging from a minimum level, e.g. level 0 (illustratively, substantially no driving automation), to a maximum level, e.g. level 5 (illustratively, full driving automation).

In the context of the present disclosure, "vehicle operation data" may be understood to describe any type of feature related to the operation of a vehicle. By way of an example, "vehicle operation data" may describe the status of the vehicle such as the type of tires of the vehicle, the type of vehicle, and/or the age of the manufacturing of the vehicle. More generally, "vehicle operation data" may describe or include static features or static vehicle operation data (illustratively, features or data not changing over time). As another example, additionally or alternatively, "vehicle operation data" may describe or include features changing during the operation of the vehicle, for example, environmental conditions, such as weather conditions or road conditions during the operation of the vehicle, fuel levels, fluid levels, operational parameters of the driving source of the vehicle, etc. More generally, "vehicle operation data" may describe or include varying features or varying vehicle operation data (illustratively, time-varying features or data).

Various aspects described herein may utilize one or more machine learning models to perform or control functions of the vehicle (or other functions described herein). The term "model" as, for example, used herein may be understood as any kind of algorithm, which provides output data from input data (e.g., any kind of algorithm generating or calculating output data from input data). A machine learning model may be executed by a computing system to progressively improve performance of a specific task. In some aspects, parameters of a machine learning model may be adjusted during a training phase based on training data. A trained machine learning model may be used during an inference phase to make predictions or decisions based on input data. In some aspects, the trained machine learning model may be used to generate additional training data. An additional machine learning model may be adjusted during a second training phase based on the generated additional training data. A trained additional machine learning model may be used during an inference phase to make predictions or decisions based on input data.

The machine learning models described herein may take any suitable form or utilize any suitable technique (e.g., for training purposes). For example, any of the machine learning models may utilize supervised learning, semi-supervised learning, unsupervised learning, or reinforcement learning techniques.

In supervised learning, the model may be built using a training set of data including both the inputs and the corresponding desired outputs (illustratively, each input may be associated with a desired or expected output for that input). Each training instance may include one or more inputs and a desired output. Training may include iterating through training instances and using an objective function to teach the model to predict the output for new inputs (illustratively, for inputs not included in the training set). In semi-supervised learning, a portion of the inputs in the training set may be missing the respective desired outputs (e.g., one or more inputs may not be associated with any desired or expected output).

In unsupervised learning, the model may be built from a training set of data including only inputs and no desired outputs. The unsupervised model may be used to find structure in the data (e.g., grouping or clustering of data points), illustratively, by discovering patterns in the data. Techniques that may be implemented in an unsupervised learning model may include, e.g., self-organizing maps, nearest-neighbor mapping, k-means clustering, and singular value decomposition.

Reinforcement learning models may include positive or negative feedback to improve accuracy. A reinforcement learning model may attempt to maximize one or more objectives/rewards. Techniques that may be implemented in a reinforcement learning model may include, e.g., Q-learning, temporal difference (TD), and deep adversarial networks.

Various aspects described herein may utilize one or more classification models. In a classification model, the outputs may be restricted to a limited set of values (e.g., one or more classes). The classification model may output a class for an input set of one or more input values. An input set may include sensor data, such as image data, radar data, LIDAR data, and the like. A classification model as described herein may, for example, classify certain driving conditions and/or environmental conditions, such as weather conditions, road conditions, and the like. References herein to classification models may contemplate a model that implements, e.g., any one or more of the following techniques: linear classifiers (e.g., logistic regression or naive Bayes classifier), support vector machines, decision trees, boosted trees, random forest, neural networks, or nearest neighbor.

Various aspects described herein may utilize one or more regression models. A regression model may output a numerical value from a continuous range based on an input set of one or more values (illustratively, starting from or using an input set of one or more values). References herein to regression models may contemplate a model that implements, e.g., any one or more of the following techniques (or other suitable techniques): linear regression, decision trees, random forest, or neural networks.

A machine learning model described herein may be or may include a neural network. The neural network may be any kind of neural network, such as a convolutional neural network, an autoencoder network, a variational autoencoder network, a sparse autoencoder network, a recurrent neural network, a deconvolutional network, a generative adversarial network, a forward-thinking neural network, a sum-product neural network, and the like. The neural network may include any number of layers. The training of the neural network (e.g., adapting the layers of the neural network) may use or may be based on any kind of training principle, such as backpropagation (e.g., using the backpropagation algorithm).

Throughout the present disclosure, the following terms may be used as synonyms: driving parameter set, driving model parameter set, safety layer parameter set, driver assistance, automated driving model parameter set, and/or the like (e.g., driving safety parameter set). These terms may correspond to groups of values used to implement one or more models for directing a vehicle in the manners described in this disclosure.

Furthermore, throughout the present disclosure, the following terms may be used as synonyms: driving parameter, driving model parameter, safety layer parameter, driver assistance and/or automated driving model parameter, and/or the like (e.g., driving safety parameter), and may correspond to specific values within the previously described sets.

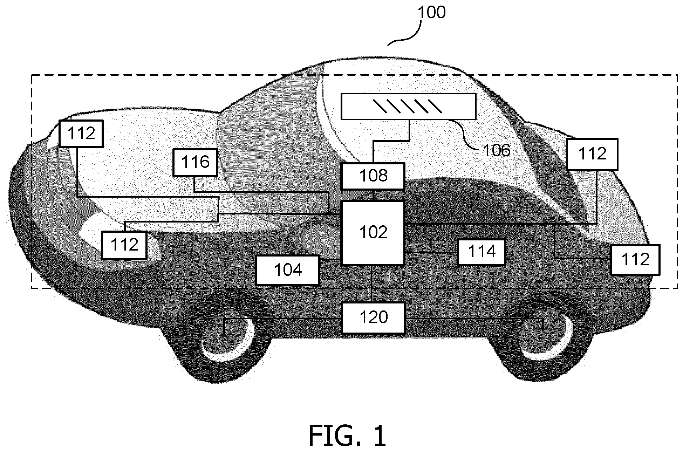

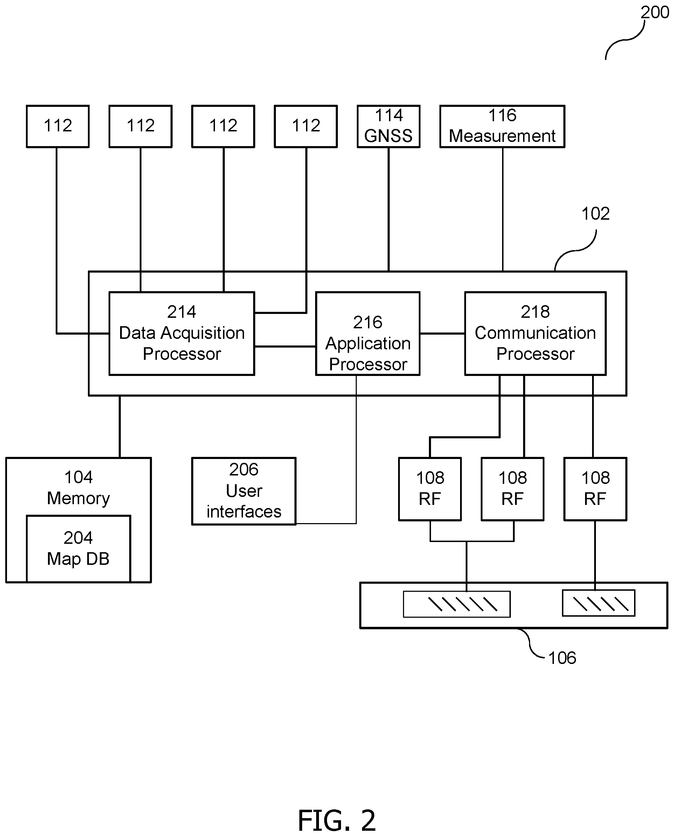

FIG. 1 shows a vehicle 100 including a mobility system 120 and a control system 200 (see also FIG. 2). FIG. 1 and FIG. 2 are provided in a complementary manner. It is appreciated that vehicle 100 and control system 200 are exemplary in nature and may thus be simplified for explanatory purposes. For example, while vehicle 100 is depicted as a ground vehicle, this may be equally or analogously applied to aerial vehicles, water vehicles (e.g. sea vehicles, underwater vehicles), and such. Furthermore, the quantities and locations of elements, as well as relational distances (as discussed above, the figures are not to scale) are provided as examples and are not limited thereto. The components of vehicle 100 may be arranged around a vehicular housing of vehicle 100, mounted on or outside of the vehicular housing, enclosed within the vehicular housing, or any other arrangement relative to the vehicular housing where the components move with vehicle 100 as it travels.

In addition to including a control system 200, vehicle 100 may also include a mobility system 120. Mobility system 120 may include components of vehicle 100 related to steering and movement of vehicle 100. In some aspects, where vehicle 100 is an automobile, for example, mobility system 120 may include wheels and axles, a suspension, an engine, a transmission, brakes, a steering wheel, associated electrical circuitry and wiring, and any other components used in the driving of an automobile. In some aspects, where vehicle 100 is an aerial vehicle, mobility system 120 may include one or more of rotors, propellers, jet engines, wings, rudders or wing flaps, air brakes, a yoke or cyclic, associated electrical circuitry and wiring, and any other components used in the flying of an aerial vehicle. In some aspects, where vehicle 100 is an aquatic or sub-aquatic vehicle, mobility system 120 may include any one or more of rudders, engines, propellers, a steering wheel, associated electrical circuitry and wiring, and any other components used in the steering or movement of an aquatic vehicle. In some aspects, mobility system 120 may also include autonomous driving functionality, and accordingly may include an interface with one or more processors 102 configured to perform autonomous driving computations and decisions and an array of sensors for movement and obstacle sensing. In this sense, the mobility system 120 may be provided with instructions to direct the navigation and/or mobility of vehicle 100 from one or more components of the control system 200. The autonomous driving components of mobility system 120 may also interface with one or more radio frequency (RF) transceivers 108 to facilitate mobility coordination with other nearby vehicular communication devices and/or central networking components. The devices or components can perform decisions and/or computations related to autonomous driving.

Mobility system 120 may also include autonomous driving functionality, and accordingly may include an interface with one or more processors 102 configured to perform autonomous driving computations and decisions and an array of sensors for movement and obstacle sensing. In this sense, the mobility system 120 may be provided with instructions to direct the navigation and/or mobility of vehicle 100 from one or more components of the control system 200. The autonomous driving components of mobility system 120 may also interface with one or more radio frequency (RF) transceivers 108 to facilitate mobility coordination with other nearby vehicular communication devices and/or central networking components, such as a traffic infrastructure system, or a roadside unit, or a monitoring system.

The control system 200 may include various components depending on the requirements of a particular implementation. As shown in FIG. 1 and FIG. 2, the control system 200 may include one or more processors 102, one or more memories 104, an antenna system 106 which may include one or more antenna arrays at different locations on the vehicle for radio frequency (RF) coverage, one or more radio frequency (RF) transceivers 108, one or more data acquisition devices 112, one or more position devices 114 which may include components and circuitry for receiving and determining a position based on a Global Navigation Satellite System (GNSS) and/or a Global Positioning System (GPS), and one or more measurement sensors 116, e.g. speedometer, altimeter, gyroscope, velocity sensors, etc.

In accordance with various aspects described herein, the control system 200 may also be referred to as an intelligent transportation system of the vehicle 100, in particular with respect to operations described herein to control the vehicle's 100 mobility via mobility system 120 and/or interactions with its environment.

The control system 200 may be configured to control the vehicle's 100 mobility via mobility system 120 and/or interactions with its environment, e.g. communications with other devices or network infrastructure elements (NIEs) such as base stations, via data acquisition devices 112 and the radio frequency communication arrangement including the one or more RF transceivers 108 and antenna system 106.

It is to be noted that the control system 200 may include any (control or other) function in the vehicle 100 (e.g. a passenger car, a truck, a motorcycle, an electric bicycle, an electric trolley, etc.) which may affect the behavior of the vehicle (such as a function controlling the vehicle speed, the vehicle position with respect to other vehicle (for example distance control to a vehicle in front), etc.) and/or which may control any external communication of the vehicle for example through C-V2X, ITS-G5, DSRC or any other suitable communication protocol, some of which are described herein and/or which may relate to any automation/autonomy enabling function of a vehicle (including the SAE levels defined as follows:
Level 0 (No Driving Automation)
Level 1 (Driver Assistance)
Level 2 (Partial Driving Automation)
Level 3 (Conditional Driving Automation)
Level 4 (High Driving Automation)
Level 5 (Full Driving Automation))"

The one or more processors 102 may include a data acquisition processor 214, an application processor 216, a communication processor 218, and/or any other suitable processing device. Each processor 214, 216, 218 of the one or more processors 102 may include various types of hardware-based processing devices. By way of example, each processor 214, 216, 218 may include a microprocessor, pre-processors (such as an image preprocessor), graphics processors, a CPU, support circuits, digital signal processors, integrated circuits, memory, or any other types of devices suitable for running applications and for image processing and analysis. Each processor 214, 216, 218 may include any type of single or multi-core processor, mobile device microcontroller, central processing unit, etc. These processor types may each include multiple processing units with local memory and instruction sets. Such processors may include video inputs for receiving image data from multiple image sensors and may also include video out capabilities.

Any of the processors 214, 216, 218 disclosed herein may be configured to perform certain functions in accordance with program instructions which may be stored in a memory of the one or more memories 104. In other words, a memory of the one or more memories 104 may store software that, when executed by a processor (e.g., by the one or more processors 102), controls the operation of the system, e.g., a driving and/or safety system. A memory of the one or more memories 104 may store one or more databases and image processing software, as well as a trained system, such as a neural network, or a deep neural network, for example. The one or more memories 104 may include any number of random-access memories, read only memories, flash memories, disk drives, optical storage, tape storage, removable storage and other types of storage. Alternatively, each of processors 214, 216, 218 may include an internal memory for such storage.

The data acquisition processor 214 may include processing circuity, such as a CPU, for processing data acquired by data acquisition units 112. For example, if one or more data acquisition units are image acquisition units including sensors e.g. one or more cameras, then the data acquisition processor may include image processors for processing image data using the information obtained from the image acquisition units as an input. The data acquisition processor 214 may therefore be configured to create voxel maps detailing the surrounding of the vehicle 100 based on the data input from the data acquisition units 112, i.e., cameras in this example. For example, the one or more data acquisition units may include sensors, and the data acquisition processor 214 may receive information from the sensors and provide sensor data to the application processor. The sensor data may include information indicating the detections performed by the sensors.

Application processor 216 may be a CPU, and may be configured to handle the layers above the protocol stack, including the transport and application layers. Application processor 216 may be configured to execute various applications and/or programs of vehicle 100 at an application layer of vehicle 100, such as an operating system (OS), a user interfaces (UI) 206 for supporting user interaction with vehicle 100, and/or various user applications. Application processor 216 may interface with communication processor 218 and act as a source (in the transmit path) and a sink (in the receive path) for user data, such as voice data, audio/video/image data, messaging data, application data, basic Internet/web access data, etc. Application processor 216 may interface with the data acquisition processor 214 to receive sensor data.

In the transmit path, communication processor 218 may therefore receive and process outgoing data provided by application processor 216 according to the layer-specific functions of the protocol stack, and provide the resulting data to digital signal processor 208. Communication processor 218 may then perform physical layer processing on the received data to produce digital baseband samples, which digital signal processor may provide to RF transceiver 108. RF transceiver 108 may then process the digital baseband samples to convert the digital baseband samples to analog RF signals, which RF transceiver 108 may wirelessly transmit via antenna system 106.

In the receive path, RF transceiver 108 may receive analog RF signals from antenna system 106 and process the analog RF signals to obtain digital baseband samples. RF transceiver 108 may provide the digital baseband samples to communication processor 218, which may perform physical layer processing on the digital baseband samples. Communication processor 218 may then provide the resulting data to other processors of the one or more processors 102, which may process the resulting data according to the layer-specific functions of the protocol stack and provide the resulting incoming data to application processor 216. Application processor 216 may then handle the incoming data at the application layer, which can include execution of one or more application programs with the data and/or presentation of the data to a user via a user interface 206. User interfaces 206 may include one or more screens, microphones, mice, touchpads, keyboards, or any other interface providing a mechanism for user input.

In various aspects provided herein, the resulting data may include various types of information associated with information provided by messages decoded by the communication processor 218 received via designated messaging architectures, such as V2X, ITS, etc. for the control operations of the control system 200 of the vehicle 100, illustratively, for the control of the mobility system 120. In some examples, the data acquisition processor 214 processor may also access the information provided by the messages for its operations.

In some examples, the communication processor 218 may include a digital signal processor and/or a controller which may direct such communication functionality of vehicle 100 according to various communication protocols associated with wired communication protocols, such as universal serial bus (USB) protocol for data communication etc., with various types of devices connected to a port coupled to the communication processor 218. In particular, in accordance with various aspects provided herein, the port may be configured to be coupled to a mobile communication device, such as a mobile phone or a smartphone to transfer data between the control system 200 and the mobile communication device.

The communication processor 218 may include a digital signal processor and/or a controller which may direct such communication functionality of vehicle 100 according to the communication protocols associated with one or more radio access networks, and may execute control over antenna system 106 and RF transceiver(s) 108 to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness, the configuration of vehicle 100 shown in FIGS. 1 and 2 may depict only a single instance of such components.

Vehicle 100 may transmit and receive wireless signals with antenna system 106, which may be a single antenna or an antenna array that includes multiple antenna elements. Antenna system 202 may additionally include analog antenna combination and/or beamforming circuitry. In the receive (RX) path, RF transceiver(s) 108 may receive analog radio frequency signals from antenna system 106 and perform analog and digital RF front-end processing on the analog radio frequency signals to produce digital baseband samples (e.g., In-Phase/Quadrature (IQ) samples) to provide to communication processor 218. RF transceiver(s) 108 may include analog and digital reception components including amplifiers (e.g., Low Noise Amplifiers (LNAs)), filters, RF demodulators (e.g., RF IQ demodulators)), and analog-to-digital converters (ADCs), which RF transceiver(s) 108 may utilize to convert the received radio frequency signals to digital baseband samples. In the transmit (TX) path, RF transceiver(s) 108 may receive digital baseband samples from communication processor 218 and perform analog and digital RF front-end processing on the digital baseband samples to produce analog radio frequency signals to provide to antenna system 106 for wireless transmission. RF transceiver(s) 108 may thus include analog and digital transmission components including amplifiers (e.g., Power Amplifiers (PAs), filters, RF modulators (e.g., RF IQ modulators), and digital-to-analog converters (DACs), which RF transceiver(s) 108 may utilize to mix the digital baseband samples received from communication processor 218 and produce the analog radio frequency signals for wireless transmission by antenna system 106. Communication processor 218 may control the radio transmission and reception of RF transceiver(s) 108, including specifying the transmit and receive radio frequencies for operation of RF transceiver(s) 108.

Communication processor 218 may include a baseband modem configured to perform physical layer (PHY, Layer 1) transmission and reception processing to, in the transmit path, prepare outgoing transmit data provided by communication processor 218 for transmission via RF transceiver(s) 108, and, in the receive path, prepare incoming received data provided by RF transceiver(s) 108 for processing by communication processor 218. The baseband modem may include a digital signal processor and/or a controller. The digital signal processor may be configured to perform one or more of error detection, forward error correction encoding/decoding, channel coding, and interleaving, channel modulation/demodulation, physical channel mapping, radio measurement and search, frequency and time synchronization, antenna diversity processing, power control, and weighting, rate matching/de-matching, retransmission processing, interference cancelation, and any other physical layer processing functions. The digital signal processor may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components.

In some aspects, the digital signal processor may include one or more processors configured to retrieve and execute program code that defines control and processing logic for physical layer processing operations. In some aspects, the digital signal processor may execute processing functions with software via the execution of executable instructions. In some aspects, the digital signal processor may include one or more dedicated hardware circuits (e.g., ASICs, FPGAs, and other hardware) that are digitally configured to specific execute processing functions, where the one or more processors of digital signal processor may offload specific processing tasks to these dedicated hardware circuits, which are known as hardware accelerators. Exemplary hardware accelerators can include Fast Fourier Transform (FFT) circuits and encoder/decoder circuits. The digital signal processor's processor and hardware accelerator components may be realized as a coupled integrated circuit in some aspects.

RF transceiver(s) 108 may include separate RF circuitry sections dedicated to different respective radio communication technologies, and/or RF circuitry sections shared between multiple radio communication technologies. Antenna system 106 may include separate antennas dedicated to different respective radio communication technologies, and/or antennas shared between multiple radio communication technologies. Accordingly, antenna system 106, RF transceiver(s) 108, and communication processor 218 can encompass separate and/or shared components dedicated to multiple radio communication technologies.

Vehicle 100 may be configured to operate according to one or more radio communication technologies. The digital signal processor of the communication processor 218 may be responsible for lower-layer processing functions (e.g., Layer 1/PHY) of the radio communication technologies. In contrast, a controller of the communication processor 218 may be responsible for upper-layer protocol stack functions (e.g., Data Link Layer/Layer 2 and/or Network Layer/Layer 3). The controller may thus be responsible for controlling the radio communication components of vehicle 100 (antenna system 106, RF transceiver(s) 108, position device 114, etc.) in accordance with the communication protocols of each supported radio communication technology, and accordingly may represent the Access Stratum and Non-Access Stratum (NAS) (also encompassing Layer 2 and Layer 3) of each supported radio communication technology. The controller may be structurally embodied as a protocol processor configured to execute protocol stack software (retrieved from a controller memory) and subsequently control the radio communication components of vehicle 100 to transmit and receive communication signals in accordance with the corresponding protocol stack control logic defined in the protocol stack software. The controller may include one or more processors configured to retrieve and execute program code that defines the upper-layer protocol stack logic for one or more radio communication technologies, which can include Data Link Layer/Layer 2 and Network Layer/Layer 3 functions. The controller may be configured to perform both user-plane and control-plane functions to facilitate the transfer of application layer data to and from vehicle 100 according to the specific protocols of the supported radio communication technology. User-plane functions can include header compression and encapsulation, security, error checking and correction, channel multiplexing, scheduling, and priority, while control-plane functions may include setup and maintenance of radio bearers. The program code retrieved and executed by the controller of communication processor 218 may include executable instructions that define the logic of such functions.

In some aspects, vehicle 100 may be configured to transmit and receive data according to multiple radio communication technologies. Accordingly, in some aspects, one or more of antenna system 106, RF transceiver(s) 108, and communication processor 218 may include separate components or instances dedicated to different radio communication technologies and/or unified components that are shared between different radio communication technologies. For example, in some aspects, multiple controllers of communication processor 218 may be configured to execute multiple protocol stacks, each dedicated to a different radio communication technology and either at the same processor or different processors. In some aspects, multiple digital signal processors of communication processor 218 may include separate processors and/or hardware accelerators that are dedicated to different respective radio communication technologies, and/or one or more processors and/or hardware accelerators that are shared between multiple radio communication technologies. In some aspects, RF transceiver(s) 108 may include separate RF circuitry sections dedicated to different respective radio communication technologies, and/or RF circuitry sections shared between multiple radio communication technologies. In some aspects, antenna system 106 may include separate antennas dedicated to different respective radio communication technologies, and/or antennas shared between multiple radio communication technologies. Accordingly, antenna system 106, RF transceiver(s) 108, and communication processor 218 can encompass separate and/or shared components dedicated to multiple radio communication technologies.

Communication processor 218 may be configured to implement one or more vehicle-to-everything (V2X) communication protocols associated with how information is exchanged between vehicles, infrastructure, networks, pedestrians, and other devices. These protocols may include various rules, formats, and procedures for data transmission, ensuring interoperability and standardized communication. Protocols within C-V2X may include standards like IEEE 802. 11p (for Dedicated Short-Range Communications, DSRC), Cellular-V2X (C-V2X) based on 3GPP standards (Release 14/15), and future developments aligned with 5G technologies.

In accordance with various aspects described herein, the communication processor 218 may obtain traffic-related information provided via V2X communication through various services enabled by these protocols. These services may be associated with practical applications and capabilities that result from the exchange of information among vehicles, infrastructure elements, networks, pedestrians, and other devices. Such services may facilitate an exchange of various types of traffic-related information, which the control system 200 may take as input and perform its control operations according to those traffic-related information elements.

Illustratively, such services may include vehicle-to-vehicle (V2V) services, in which the communication processor 218 may decode service information shared by other vehicles, which the information may include information about, each being an illustrative service information element: speed, location, direction, accident warnings, sudden braking warnings, road hazards, and further traffic-related information to enhance safety and traffic efficiency. The communication processor 218 may also encode similar self-service information to be sent to other vehicles.

Such services may further include vehicle-to-infrastructure (V2I) services, in which the communication processor 218 may decode service information shared by traffic infrastructure entities, such as, each being an illustrative service information element: traffic lights, signages, road sensors, etc., which the information may include information about road conditions, traffic congestions, upcoming obstacles, etc. The communication processor 218 may also encode similar self-service information to be sent to traffic infrastructure entities.

Such services may further include vehicle-to-pedestrian (V2P) services, in which the communication processor 218 may decode service information shared by mobile communication devices of pedestrians (e.g. mobile phones, smartphones, wearables, etc.), such as information, each being an illustrative service information element: about presence and location of the pedestrians. The communication processor 218 may also encode similar self-service information to be sent to pedestrian devices.

Such services may further include vehicle-to-network (V2N) services, in which the communication processor 218 may decode service information shared by network structures, such as servers, cloud services, etc. The information may include information about, each being an illustrative service information element: maps, road maps, traffic information, weather information, infotainment systems related information, software updates, and other cloud-based services, which may be used to improve navigation and driving experience of the vehicle.

Such services may further include vehicle-to-network (V2D) services, in which the communication processor 218 may decode service information shared by various types of connected devices, such as smartphones, smart home devices, wearables, IoT devices, etc. The information may include information about, each being an illustrative service information element: remote vehicle control, synchronized settings, or seamless integration with personal devices to improve driving experience.

Communication processor 218 may be configured to operate via a first RF transceiver of the one or more RF transceivers(s) 108 according to different desired radio communication protocols or standards. By way of example, communication processor 218 may be configured according to a Short-Range mobile radio communication standard such as, e.g., Bluetooth, Zigbee, and the like first RF transceiver may correspond to the corresponding Short-Range mobile radio communication standard. As another example, communication processor 218 may be configured to operate via a second RF transceiver of the one or more RF transceivers(s) 108 in accordance with a Medium or Wide Range mobile radio communication standard such as, e.g., a 3G (e.g., Universal Mobile Telecommunications System-UMTS), a 4G (e.g., Long Term Evolution-LTE), or a 5G mobile radio communication standard in accordance with corresponding 3GPP (3rd Generation Partnership Project) standards. As a further example, communication processor 218 may be configured to operate via a third RF transceiver of the one or more RF transceivers(s) 108 in accordance with a Wireless Local Area Network communication protocol or standard such as, e.g., in accordance with IEEE 802.11 (e.g., 802.11, 802.11a, 802.11b, 802.11g, 802.11n, 802.11p, 802.11-12, 802.11ac, 802.11ad, 802.11ah, and the like). The one or more RF transceiver(s) 108 may be configured to transmit signals via antenna system 106 over an air interface. The RF transceivers 108 may each have a corresponding antenna element of antenna system 106, or may share an antenna element of the antenna system 106.

Memory 104 may embody a memory component of vehicle 100, such as a hard drive or another such permanent memory device. Although not explicitly depicted in FIGs. 1 and 2, the various other components of vehicle 100, e.g. one or more processors 102, shown in FIGs. 1 and 2 may additionally each include integrated permanent and non-permanent memory components, such as for storing software program code, buffering data, etc.

The antenna system 106 may include a single antenna or multiple antennas. Each of the one or more antennas of antenna system 106 may be placed at a plurality of locations on the vehicle 100 in order to ensure maximum RF coverage. The antennas may include a phased antenna array, a switch-beam antenna array with multiple antenna elements, etc. Antenna system 106 may be configured to operate according to analog and/or digital beamforming schemes in order to maximize signal gains and/or provide levels of information privacy. Antenna system 106 may include separate antennas dedicated to different respective radio communication technologies, and/or antennas shared between multiple radio communication technologies.

While shown as a single element in FIG. 1, antenna system 106 may include a plurality of antenna elements (e.g., multiple antenna arrays) positioned at different locations on vehicle 100. The placement of the plurality of antenna elements may be strategically chosen in order to ensure a desired degree of RF coverage. For example, additional antennas may be placed at the front, back, corner(s), and/or on the side(s) of the vehicle 100.

Data acquisition devices 112 may include any number of data acquisition devices and components, including sensors, depending on the requirements of a particular application. This may include image acquisition devices, proximity detectors, acoustic sensors, pressure sensors, fingerprint sensors, motion detectors, etc., for providing data about the interior of the vehicle or the vehicle's environment. Image acquisition devices may include cameras (e.g., multimodal cameras, standard cameras, digital cameras, video cameras, single-lens reflex cameras, infrared cameras, stereo cameras, depth cameras, RGB cameras, depth cameras, etc.), charge coupling devices (CCDs), or any type of image sensor. Proximity detectors may include radar sensors, light detection and ranging (LIDAR) sensors, mmWave radar sensors, etc. Acoustic sensors may include microphones, sonar sensors, ultrasonic sensors, etc. Furthermore, the data acquisition devices may include the sensors coupled to the mobility system 120, such as the accelerometers, inertial measurement unit (IMU) sensors coupled to vibration sources of the vehicle.

Data acquisition devices 112 may include any number of data acquisition devices and components depending on the requirements of a particular application. This may include: image acquisition devices, proximity detectors, acoustic sensors, infrared sensors, piezoelectric sensors, etc., for providing data about the vehicle's environment. Image acquisition devices may include cameras (e.g., standard cameras, digital cameras, video cameras, single-lens reflex cameras, infrared cameras, stereo cameras, etc.), charge coupling devices (CCDs) or any type of image sensor. Proximity detectors may include radar sensors, light detection and ranging (LIDAR) sensors, mmWave radar sensors, etc. Acoustic sensors may include: microphones, sonar sensors, ultrasonic sensors, etc. Accordingly, each of the data acquisition units may be configured to observe a particular type of data of the vehicle's 100 environment and forward the data to the data acquisition processor 214 in order to provide the vehicle with an accurate portrayal of the vehicle's environment. The data acquisition devices 112 may be configured to implement pre-processed sensor data, such as radar target lists or LIDAR target lists, in conjunction with acquired data.

Accordingly, each of the data acquisition units may be configured to observe a particular type of data of an occupant of the vehicle 100 or the vehicle's 100 environment and forward the data to the data acquisition processor 214 in order to provide the vehicle with an accurate portrayal of the interior of the vehicle 100 or vehicle's 100 environment. The data acquisition devices 112 may be configured to implement pre-processed sensor data, such as radar target lists or LIDAR target lists, in conjunction with acquired data.

Measurement devices 116 may include other devices for measuring vehicle-state parameters, such as a velocity sensor (e.g., a speedometer) for measuring a velocity of the vehicle 100, one or more accelerometers (either single axis or multi-axis) for measuring accelerations of the vehicle 100 along one or more axes, a gyroscope for measuring orientation and/or angular velocity, odometers, altimeters, thermometers, etc. It is appreciated that vehicle 100 may have different measurement devices 116 depending on the type of vehicle it is, e.g., car vs. drone vs. boat.

Position devices 114 may include components for determining a position of the vehicle 100. For example, this may include GPS or other GNSS circuitry configured to receive signals from a satellite system and determine a position of the vehicle 100. Position devices 114, accordingly, may provide vehicle 100 with satellite navigation features. The one or more position devices 114 may include components (e.g., hardware and/or software) for determining the position of vehicle 100 by other means, e.g. by using triangulation and/or proximity to other devices such as NIEs.

The one or more memories 104 may store data, e.g., in a database or in any different format, that may correspond to a map. For example, the map may indicate a location of known landmarks, roads, paths, network infrastructure elements, or other elements of the vehicle's 100 environment. The one or more processors 102 may process sensory information (sensor data including information such as images, sensor readings, radar signals, depth information from LIDAR, or stereo processing of two or more images) of the environment of the vehicle 100 together with position information, such as GPS coordinates, a vehicle's ego-motion, etc., to determine a current location of the vehicle 100 relative to the known landmarks, and refine the determination of the vehicle's location. Certain aspects of this technology may be included in a localization technology such as a mapping and routing model.

The map database (DB) 204 may include any type of database storing (digital) map data for the vehicle 100, e.g., for the control system 200 . The map database 204 may include data relating to the position, in a reference coordinate system, of various items, including roads, water features, geographic features, businesses, points of interest, restaurants, gas stations, etc. The map database 204 may store the locations of such items and descriptors relating to those items, including, for example, names associated with any of the stored features. In some aspects, a processor of the one or more processors 102 may download information from the map database 204 over a wired or wireless data connection to a communication network (e.g., over a cellular network and/or the Internet, etc.). In some cases, the map database 204 may store a sparse data model including polynomial representations of certain road features (e.g., lane markings) or target trajectories for the vehicle 100 . The map database 204 may also include stored representations of various recognized landmarks that may be provided to determine or update a known position of the vehicle 100 with respect to a target trajectory. The landmark representations may include data fields such as landmark type, landmark location, among other potential identifiers.

Furthermore, the control system 200 may include a driving model, e.g., implemented in an advanced driving assistance system (ADAS) and/or a driving assistance and automated driving system. By way of example, the control system 200 may include (e.g., as part of the driving model) a computer implementation of a formal model such as a safety driving model. A safety driving model may be or include a mathematical model formalizing an interpretation of applicable laws, standards, policies, etc. that are applicable to self-driving vehicles. A safety driving model may be designed to achieve, e.g., three goals: first, the interpretation of the law should be sound in the sense that it complies with how humans interpret the law; second, the interpretation should lead to a useful driving policy, meaning it will lead to an agile driving policy rather than an overly-defensive driving which inevitably would confuse other human drivers and will block traffic and in turn limit the scalability of system deployment; and third, the interpretation should be efficiently verifiable in the sense that it can be rigorously proven that the self-driving (autonomous) vehicle correctly implements the interpretation of the law. A safety driving model, illustratively, may be or include a mathematical model for safety assurance that enables identification and performance of proper responses to dangerous situations such that self-perpetrated accidents can be avoided.

As described above, the vehicle 100 may include the control system 200 as also described with reference to FIG. 2. The vehicle 100 may include the one or more processors 102 integrated with or separate from an engine control unit (ECU) which may be included in the mobility system 120 of the vehicle 100. The control system 200 may, in general, generate data to control or assist to control the ECU and/or other components of the vehicle 100 to directly or indirectly control the movement of the vehicle 100 via mobility system 120. The one or more processors 102 of the vehicle 100 may be configured to perform as described herein.

The components illustrated in FIGS. 1 and 2 may be operatively connected to one another via any appropriate interfaces. Furthermore, it is appreciated that not all the connections between the components are explicitly shown, and other interfaces between components may be covered within the scope of this disclosure.

In a road environment, it may be desirable for a vehicle 100 to communicate with other entities in order to enhance the road safety and provide more efficient traffic situation within the road environment. Developing ITS (i.e. V2X, e.g. C-V2X) services, such as V2V (vehicle-to-vehicle) in which a vehicle communicates with another vehicle, V2I (vehicle-to-infrastructure), in which a vehicle communicates with an infrastructure item, such as a traffic infrastructure system or a roadside unit, V2N (vehicle-to-network) in which a vehicle communicates with a network function, V2P (vehicle-to-pedestrian) in which a vehicle communicates with a pedestrian are adopted for this purpose, which are combined together as V2X (vehicle-to-everything).

V2X messages shared using V2X protocols may include various data items, as also referred to as service information, that may be in a form of data elements or data frames indicating information including any type of traffic related information under various categories. Such categories may include vehicle information indicating a feature of a vehicle such as driving direction, information relating acceleration/deacceleration of a vehicle etc., geo-reference information indicating a geographical description e.g. altitude, longitude, latitude related information, road topology information indicating information related to road topology such as road segment type, traffic information indicating traffic related information such as a presence of accident, presence of dangerous situation, infrastructure information indicating information about the infrastructure, such as a presence of a toll or a road side unit, personal information indicating a personal information, communication information that are related to the application layer of the communication protocol, such as an identifier of a station exchanging information, and other information such as type of a station which exchanges information. Each of listed information here may be referred to as a service information element.

In accordance with various aspects described herein, the communication processor 218 may decode such V2X messages received from the antenna system 106. In some examples, the communication processor 218 may encode V2X messages for transmission. Encoded V2X messages may include information indicating an observation that the vehicle 100 performs using data acquisition devices 112. For example, V2X messages may include information indicating a list of objects that the vehicle 100 has detected in its vicinity using data acquisition devices 112. The vehicle 100 may transmit the list of objects for other vehicles to make other vehicles aware of the objects that the vehicle 100 has detected using data acquisition devices 112.

Various aspects described herein may relate to an in-vehicle Intelligent Transportation System (ITS) (e.g. the control system 200) and an interaction between the ITS and a mobile communication device. ITS may refer to technology or a set of different technologies associated with transportation infrastructure and vehicles to provide certain level of quality of experience in terms of safety, efficiency, mobility etc. to the vehicles and the occupants of the vehicles. Such technologies may improve, enhance and/or ease the transportation experience. In that sense, ITS may include a variety of services and/or features using those different technologies. In an example, ITS may leverage communication technologies such as Dedicated Short-Range communication (DSRC) and/or Cellular Vehicle-to-Everything (C-V2X communication) to allow information exchange, for instance between vehicles (i.e., V2V communication) or between a vehicle, such as the vehicle 100, and a roadside unit, such as traffic lights.

Illustratively, the ITS may include any (control or other) function in the vehicle 100 (e.g. a passenger car, a truck, a motorcycle, an electric bicycle, an electric trolley, etc.) which may affect the behavior of the vehicle (such as a function controlling the vehicle speed, the vehicle position with respect to other vehicle (for example distance control to a vehicle in front), etc.) and/or which may control any external communication of the vehicle for example through C-V2X, ITS-G5, DSRC or any other suitable communication protocol, some of which are described herein and/or which may relate to any automation/autonomy enabling function of a vehicle (including the SAE levels defined as follows:
Level 0 (No Driving Automation)
Level 1 (Driver Assistance)
Level 2 (Partial Driving Automation)
Level 3 (Conditional Driving Automation)
Level 4 (High Driving Automation)
Level 5 (Full Driving Automation))"

In an example, V2V communication may allow the vehicle 100 to exchange or share information about the vehicle 100 with another vehicle. The information may include speed of the vehicle 100, position of the vehicle 100, proximity of the vehicle 100, acceleration of the vehicle 100, direction of the vehicle 100, etc. Such information exchanging or sharing may decrease accident and/or collision likelihood, providing an enhanced safety for the vehicles as well as the occupants. V2V communication may prove to be useful particularly in densely populated cities whose vehicle traffic is congested due to the number of vehicles occupying the roads. In such case, V2V communication may improve the traffic flow as the vehicles may share and/or exchange relevant information with each other to prevent the vehicles from colliding, causing an accident, etc.

As denoted, the technologies of the ITS may encompass various services offered by the ITS which may provide a transportation experience of different aspects for the occupants. In that sense, the ITS (or use of the ITS) may not always be associated with a certain concept (e.g., safety, mobility), instead it may further include other concepts (e.g., entertainment) within the context of transportation experience. However, there may be regulatory and/or design-related restrictions that may prevent the occupants from making use of the services and/or features that the ITS technology may deliver.

Illustratively, a regulatory restriction may relate to a frequency band limitation imposed by an authority, such as European Commission. Specifically, the Commission reserved 75 MHz in the 5.9 GHz band (with a lower bound of 5.850 and an upper bound of 5.925 MHz) for ITS services based on DSRC technology in which the report dates back to 1999. In December 2019, the Commission issued a further notice proposing a modification on the report that came out in 1999. The notice aimed to repurpose 45 MHz of spectrum in the 5.850-5.895 GHz band for unlicensed use and allow immediate access for unlicensed indoor operations across the 5.850-5.895 GHz. The notice required the ITS technology to operate only in the 5.895-5.925 GHz band. Accordingly, the present frequency band for the ITS technology contains three sub-bands, each having 10-MHz channels.

A design-related restriction may refer to an occasion when a vehicle, such as the vehicle 100, does not natively support a certain ITS service that became available. The reason behind this situation may be a corresponding manufacturer preferring to configure the control system 200 with restricted resources. The restricted resources may be relevant, but not limited to restricted hardware resources. Another occasion may relate to a situation when the ITS services developed through time cannot be supported by the vehicle, even if the control system 200 is configured to support such ITS services when it has been manufactured. That situation may be likely to occur due to the relatively long lifetime of the vehicles compared to fast-evolving ITS services and technologies.

In alignment with the regulatory restriction described, namely the ITS communication technology merely having three 10-MHz channels - a total of 30 MHz - to implement the relevant services, there may be one or more problems that need to be addressed. It may be evident that the available capacity of 30 MHz is likely to result in insufficient bandwidth to implement each service offered by the ITS. That may even be more compelling when considering new services and/or new features are to be developed for the ITS in the future. In an example, an infotainment service may require more bandwidth. An example of such an infotainment service may relate to recognizing a song and streaming a corresponding video-clip of the song and lyrics on an in-vehicle display. Another example may be sharing of sensor data which is likely to require more bandwidth. To mitigate this issue, an approach to be taken may be requesting more bandwidth from the authority (e.g., the European Commission). More bandwidth, compared to existing 30 MHz total for the ITS services, may resolve the exemplified bandwidth issue. However, this may not be possible especially when there is not mass deployment of ITS services, not even at least for some of them. Therefore, a search for another short-term solution may result in limiting the number of the ITS services offered for the occupants. Nevertheless, in exchange of implementing the ITS services within the limited bandwidth, a degradation in the quality of transportation experience for the occupants may surface.

In alignment with the design-related restriction described, there may be shortcomings for the vehicle 100 to implement state-of-the-art ITS services. Manufacturers may attempt to provide software/firmware updates for the vehicles to exhibit an effort to make the vehicles support various ITS services. However, this approach may fail to add new functionalities for the corresponding vehicle if the vehicle possesses inadequate hardware resources to support the features provided by the firmware update.

Thus, in order to mitigate the effects of the issues arising from the restrictions, a multiple reasoning may be addressed. The regulatory restriction may lead to a consideration of adding ITS services not fitting into the limited available bandwidth of a total of 30 MHz (e.g., ITS services requiring more bandwidth). The design-related restriction may lead to a consideration of adding ITS services for a vehicle in which the services to be added are not supported by a corresponding vehicle natively. The absence of native support of an ITS service, herein, may refer to that the vehicle is not intended to support the corresponding service, or the hardware resources of the vehicle is inadequate to support the corresponding service, etc.

In some aspects, a solution to issues indicated in this disclosure may include using radio communication properties of a mobile communication device. The mobile communication device may be a commercial device typically owned by an occupant of a corresponding vehicle, such as the vehicle 100. The occupant may be the driver of the vehicle 100 operating the vehicle 100 or the occupant may be a passenger. The mobile communication device may be used as an anchor capable of establishing a connection to the in-vehicle ITS via a wired or wireless connection. The wired connection may be established by using a USB cable. The wireless connection may be a Bluetooth connection, a Wi-Fi connection, etc. The mobile communication device may be used to provide one or more services. In some examples, such services may be services that cannot be executed by the vehicle 100 exemplary due to the regulatory restriction indicating an insufficient bandwidth and/or a design-related restriction indicating limited hardware resources, etc.

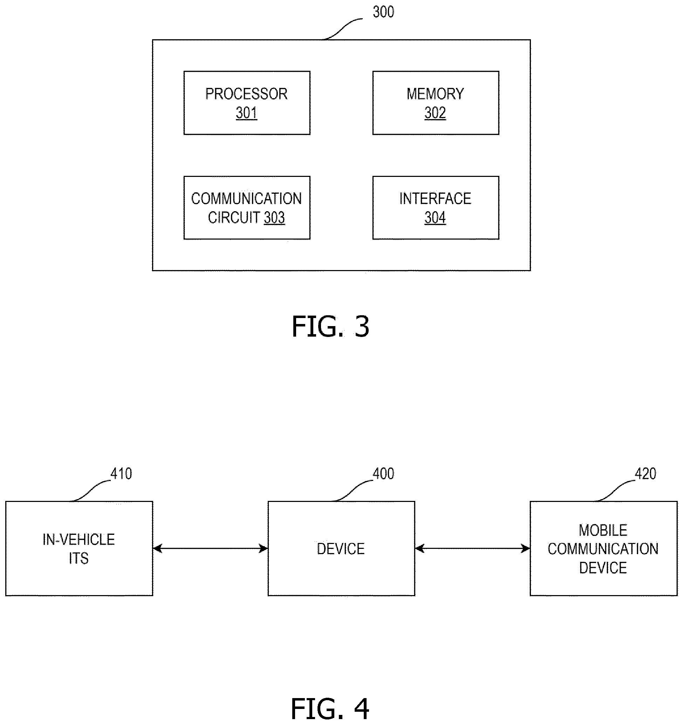

FIG. 3 shows an illustrative example of device 300 for the vehicle 100 schematically, in accordance with various aspects of the disclosure. The device 300 may include a processor 301 (e.g. the communication processor 218, the application processor 216), a memory 302 (e.g. the memory 104), a radio communication circuit 303. The radio communication circuit 303 may include a transceiver (e.g. the RF transceiver 108) to transmit and receive radio communication signals. The device 300 may include an interface 304. The interface 304 may be configured to receive data provided by a mobile communication device.

Illustratively, the interface 304 may couple the device 300 communicatively to the mobile communication device via an established connection between the device and the mobile communication device. In some examples, the established connection may be a wireless connection, and the interface 304 may be one of the communication interfaces as described above including an RF transceiver 108, the antenna system 106. In some examples, the established connection may be a wired connection, and the interface 304 may include a port configured to couple the mobile communication device via a cable. For example, the wired connection may include a USB connection, or any other connection that is fit to couple the mobile communication device to the device 300 communicatively for exchange of information.

The processor 301 may include one or more processing means. In various examples, the processor 301 may include a central processing unit (CPU), a graphics processing unit (GPU), a hardware acceleration unit (e.g. one or more dedicated hardware accelerator circuits (e.g., ASICs, FPGAs, and other hardware)), a neuromorphic chip, and/or a controller. The processor 301 may be implemented in one processing unit, e.g. a system on chip (SOC), or a processor. In some examples the processor 301 may include one or more cores as computation units, an arithmetic logic unit, a control unit, a storage unit, a plurality of registers. In some examples, the mobile communication device may provide information to the memory 302 that is accessible by the processor 301.

Therefore, the processor 301 herein may refer to any kind of technological entity that allows handling of data. The data may be handled according to one or more specific functions executed by the processor 301. Further, the processor 301 as used herein may refer to any kind of circuit, e.g., any kind of analog or digital circuit. The processor 301 may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof.

The mobile communication device may be configured to provide multiple services in which the mobile communication device may provide various types of information through provided multiple services. In some examples, the mobile communication device may provide ITS services as described above, in which the mobile communication device may provide traffic-related information as service information. In some examples, provided services may include more conventional or generic services, in which the mobile communication device may provide traffic-related and/or vehicle-related information. In accordance with various aspects described herein, the device 300 may instruct the in-vehicle ITS (e.g. the control system 200) to use information provided by the mobile communication device as input to control operations of the vehicle 100, as described herein.

For this purpose, the device 300 may, in response to establishing a connection with the mobile communication device and/or upon a received instruction, perform a procedure to determine what type of service information the in-vehicle ITS may use or may be authorized to use. In some examples, the processor 301 may initiate the procedure by exchanging capability information, in which the device 300 may receive information representing a plurality of services that the mobile communication device is capable to provide, illustratively to the device 300 and/or to the vehicle 100.

The processor 301 may decode capability information representing a set of services that the mobile communication device is capable to provide. The processor 301 may decode the received data to identify capability information representing available services provided (i.e. providable) by the mobile communication device. With each provided service of the available services, the processor 300 may obtain a particular type of service information from the mobile communication device. The capability information may further include what type of service information is provided with each service. In other words, the capability information may include information representing which service information elements are to be provided with each service.

It is to be noted that due to nature of various types of services providable by the mobile communication device, it may be desirable for the device 300 to selectively allow the in-vehicle ITS to use only selected services as provider of corresponding service information elements, noting that the in-vehicle ITS may not be configured for some of the services. Furthermore, relying on a third-party data provided by an external device for various safety-related operations of the in-vehicle ITS, in particular for control of the vehicle 100 may not be desired.

Illustratively, such services may include in-vehicle infotainment and/or entertainment-related services including a navigation service associated with a provision of various service information elements such as road mapping with traffic information, video entertainment through streaming, a diagnostic service informing about current speed of the vehicle 100, and other services manageable by the mobile communication device. The processor 301 may select one or more services among the services provided by the mobile communication device. In some aspects, the processor 301 may select service(s) based on the running functions of the ITS of the vehicle 100. The processor 301 may obtain data of the selected service(s) provided by the mobile communication device and instruct the ITS of the vehicle 100 to use the data of the selected service(s) to perform one or more ITS function.

FIG. 4 shows an illustrative example overview of a system in which a device 400, (e.g., the device 300), may interact with the mobile communication device 410 and the in-vehicle ITS 420 (e.g. the control system 200). Illustratively, the device 400 may incorporate the components and features of the exemplified device shown in FIG. 3 to interact and communicate with the mobile communication device 410 and the in-vehicle ITS 420. In some aspects, the interaction (e.g., data transmission) and communication (e.g., wireless communication) between the device 400 and the mobile communication device 420 and/or the interaction and communication between the device 400 and the in-vehicle ITS 420 may be bidirectional. In some examples, the interaction and communication between the device 400 and the mobile communication device 420 and/or the interaction and communication between the device 400 and the in-vehicle ITS 420 may be unidirectional. In an example, the device 400 may transmit signals (e.g., wireless signals) via a transceiver to the mobile communication device 410, or the device 400 may transmit signals to the in-vehicle ITS 420.

In addition to the infotainment/entertainment services provided by the mobile communication device 410, the information received from the mobile communication device 410 may include services used for a relevant in-vehicle ITS 420 component (e.g., by the ITS of the vehicle) in which various service information elements are provided. For instance, the information of services provided by the mobile communication device 410 may include a pedestrian detection service to locate a pedestrian nearby the vehicle 100.

In some aspects, the information may include a vehicle-to-vehicle (V2V) data exchange service to share and/or receive data from another vehicle. The shared and/or received data (i.e. service information element) may include information about other road users (e.g., other vehicles, bicycle riders, pedestrians, etc.). In some examples, the information (i.e. service information element) may include a data retrieval service from a roadside unit, such as traffic lights. In another example, the information (i.e. service information element) may include a coordination service to arrange the position and/or decide the behavior (e.g., speeding, braking, slowing down, etc.) of the vehicle based on the data related to other vehicles in proximity in order to provide a precaution measure (e.g., collision avoidance) where the data related to the other vehicles is obtained via V2V communication. In some cases, the information (i.e. service information element) may include a self-driving assistance service to operate an autonomous vehicle. Those cases are intended to be non-limiting and there may be a plurality of other examples for the services provided by the mobile communication device in which a relevant in-vehicle ITS 420 component uses corresponding service information elements provided by the mobile communication device 410. As denoted in one of the provided examples, the service information elements may include data collected by a plurality of sensors of the mobile communication device 410 to locate a pedestrian, and a relevant in-vehicle ITS component may include the braking mechanism functioning according to the corresponding service information elements.

In other words, noting that there are a plurality of services provide by the mobile communication device and each service of the plurality of services is configured to provide one or more particular service information elements, the in-vehicle ITS 420 may not trust to an external data source, such as the illustrated mobile communication device, at least for some of its control operations. Illustratively, for mobility system (e.g. the mobility system 120) related operations to control steering, acceleration, braking of the vehicle, the ITS 420 may perform these control operations solely information provided by measurement sensors 116 and data acquisition devices 112, position devices 114, etc., i.e. components and devices of the vehicle 100. IN some examples, the ITS 420 may further perform these control operations via exchanged V2X messages with actual entities providing such V2X messages via the antenna system 106, but not with the mobile communication device 410.

On the other hand, various further in-vehicle systems, such as infotainment/entertainment system, or various operations of the ITS 420 that may not particularly safety-related may rely on service information elements provided by some of the services of the mobile communication device.

Illustratively, the services provided by the mobile communication device 410 and used for a corresponding in-vehicle ITS 420 component may be more critical than the infotainment/entertainment services in terms of occupant safety, vehicle safety, road safety, etc. The infotainment/entertainment services may enhance the overall transportation experience of the occupant(s) of the vehicle 100 and they may not pose a security threat even if the infotainment/entertainment authorized service information elements is corrupted, modified or altered in a malicious manner. Various service information elements used for a component of the in-vehicle ITS 420, on the other hand, may jeopardize the safety of vehicle occupants, the vehicle itself, other vehicles in the vicinity, other road users (e.g., pedestrians), and other sharers of the traffic when the corresponding service information element is corrupted exemplary by an adversary attack aiming the mobile communication device 410. In that sense, use of a service provided by the mobile communication device 410 may subject to a set of criteria relating to determining which service information elements of the services provided by the mobile communication device 410 may be used to operate an ITS function of the in-vehicle ITS 420.

Referring back to FIG. 1 and FIG.2, the control system 200 may orchestrate the mobility-related behaviors of the vehicle 100 via the mobility system 120. In some aspects, the components of the mobility system 120 may refer to the components whose malfunction or misbehavior may result in safety issues for the occupants, for the vehicle 100, etc. Exemplary, the misbehavior of a component of the mobility system 120 may include premature actions, delayed actions, rule-breaking actions, etc. For instance, the braking mechanism may activate with a delay to cause physical damage of the vehicle 100 and/or injuries of the occupants. Another example may be a premature speeding up of the vehicle 100 to attempt a rule-breaking overtake. Therefore, it may be crucial that the ITS of the vehicle 100 are provided with accurate data to avoid such incidents.

In that sense, service information elements provided by the mobile communication device 410 may pose safety-related risks if the service is provided to operate an ITS function related to the mobility system 120 of the vehicle 100. Other service information elements (e.g., the infotainment/entertainment), however, may not affect the functioning of the mobility system 120 and therefore may not pose a safety-related risk even if the corresponding service information elements is inaccurate, corrupted, etc.

Thus, in some examples, service information elements which may not pose security-safety risks, such as service information elements regarding entertainment/infotainment services may be referred as "non-ITS-related data" whereas the service information elements potentially affecting the mobility system 120 of the vehicle 100 may be referred as "ITS related data". In some cases, nevertheless, the service information elements may be associated with the data to operate one or more ITS function regardless of the data affecting the mobility system 120 or not. In such case, service information elements of any service provided by the mobile communication device may be referred as "ITS-related data".

In accordance with various aspects provided herein, the processor 301 may, based on the received capability information from the mobile communication device, identify services providable by the mobile communication device. Based on information about each service received within the capability information, which may illustratively include which service information elements are to be provided with the respective service, the processor 301 may select one or more services from the plurality of services.

Illustratively, the memory 302 may store selection information representative of which service information elements may be suitable as non-ITS related data and which service information elements may be suitable as ITS related data. For example, the stored selection information may include categories and/or types of information, or designated service information elements that are suitable for ITS functions. The stored selection information may additionally or alternatively include categories and/or types of information or designated service information elements that are not suitable for ITS functions. In some examples, the stored selection information may further include that which corresponding categories and/or types of information or designated service information elements are suitable for which particular ITS functions of the available ITS functions.

Accordingly, the processor 301 may select the one or more services from the plurality of services based on the stored selection information. Illustratively, the processor 301 may select one or more first services from the plurality of services, which the one or more first services provide first service information elements (e.g. of which categories and/or types of information, or designated service information elements that are suitable for ITS functions) for all ITS functions. In some examples, the processor 301 may select one or more second services from the plurality of services, which the one or more second services provide second service information elements (e.g. of which categories and/or types of information, or designated service information elements that are suitable for some of ITS functions) for some of ITS functions (e.g. to functions of measurement sensors 116 but not to functions of mobility system 120). Further, the processor 301 may select one or more third services from the plurality of services, which the one or more third services provide second service information elements (e.g. of which categories and/or types of information, or designated service information elements that are not suitable for ITS functions) for non-ITS functions (e.g. to infotainment/entertainment system functions).

In accordance with various aspects described herein, the processor 301 may perform tagging of service information elements pertinent to one or more selected service(s) provided by the mobile communication device 410.

In one example, the tag information may represent that the data (i.e., service information element) is received from the mobile communication device 410. Illustratively, the processor 301 may tag any one of service information elements received from the mobile communication device with such a tag. Moreover, in some examples, the tag information may further represent that the data is received from an internal trusted source of the vehicle 100. Illustratively, the processor 301 may tag any information received from in-vehicle systems (e.g. information from position devices 114, measurement sensors 116, data acquisition devices 112) with such tag that indicates that the data is received from an internal trusted source.

In some aspects, the tag information may be an information with a size of 1-bit. (e.g., 0 or 1). In an example, tag information represented by bit value "0" may indicate that the data is received from (i.e., originated from) an internal trusted source of the vehicle 100 whereas the bit value "1" may indicate that the data is received from the mobile communication device 410 (or vice versa). The internal trusted sources of the vehicle 100 may include position devices 114, measurement sensors 116, data acquisition devices 112, data acquisition processor 214. The tag information may include more bits to represent the origin of the data (e.g., 0000, 0001). In some cases, the tag information may represent an authorization information for the data originating from the mobile communication device 410. The authorization information may indicate which service information elements are authorized to be provided to the ITS of the vehicle 100 for a relevant ITS component to exhibit an ITS-related action (e.g., braking, detecting a road user, etc.).

In some aspects, the tag information may be a more elaborated information represented by 2-bit size (e.g., 00, 01, etc.). In this example, each tag information may be used as illustrated before, noting that the skilled person would recognize that particular bit values illustrated in these examples may change, provided that the length is represented by at least two bits.

Illustratively, the bits value "00" may indicate that the data is originated from an internal trusted source of the vehicle 100. The bits value "01" may indicate that the data is originated from the mobile communication device 410 but service information elements pertinent to corresponding services are not authorized to be provided to the ITS 420 of the vehicle 100. In that case, the ITS 420 of the vehicle 100 may not use any service offered by the mobile communication device 410.

The bits value "11" may indicate that the data is originated from the mobile communication device 410 and service information elements pertinent to corresponding services are authorized to be provided to the ITS 420 of the vehicle 100. In that case, the ITS 420 of the vehicle 100 may use such service information elements pertinent to corresponding services are authorized to be provided to the ITS 420 provided by the mobile communication device 410.

The bits value "10" may indicate that the data is originated from the mobile communication device 410 and service information elements pertinent to corresponding services may be authorized to be provided to a subset of ITS functions of the ITS 420 of the vehicle 100. In that case, only the subset of ITS functions the ITS 420 of the vehicle 100 may use such service information elements.

In an example, the tag information may include further information such as an identifier of the mobile communication device 401, and metadata including one or more of location data, time information, day-date information, weather data, etc. In some examples, the tag information for the data originated from an internal trusted source of the vehicle 100 may be a predefined tag. In some cases, the service information elements and the associated tag information may be stored in a memory (e.g., the memory 302).

In some examples, the processor 301 may tag first service information elements pertinent to corresponding services (i.e., the first service information elements as described above) with a first tag information. The first tag information may exemplary be represented with bits value 11 indicating that the service information elements of the selected service(s) may be used by the in-vehicle ITS 420. The processor 301 may tag second service information elements (i.e., the second service information elements as described above) different from the first service information elements with a second tag information different from the first tag information. Exemplary, the second tag information may be represented with bits value 10 indicating that these service information elements may be used by only a subset ITS functions of the in-vehicle ITS 420.

In accordance with the various aspects of the disclosure, the processor 301 may determine a risk metric for a service provided by the mobile communication device 410 in which the risk score is computed based on criticality criteria in terms of physical damage that may be caused by using the corresponding service. As denoted, there may be services associated with enhancing the overall transportation experience such as infotainment/entertainment services, whereas other services may be associated with the safety of the vehicle 100, safety of the occupants, safety of other vehicles in the traffic, safety of other road users, etc.

Therefore, determining selection of one or more services from a set of available services may be based on the risk metric. Illustratively, the processor 301 may determine a corresponding risk metric for each service of the available services and select services based on the risk metric computed for the corresponding service and a threshold. In some aspects, service information elements of infotainment/entertainment services provided by the mobile communication device 410 may not be used by the ITS of the vehicle 100 to operate a relevant ITS function and instead may be used for cabin features of the vehicle 100, such as video streaming for infotainment/entertainment purposes to improve the overall quality of transportation experience.

Thus, those services may not be processed by the ITS of the vehicle 100 as they may be regarded as non-critical services in terms of safety and security. Service information elements of other services including safety-related services, on the other hand, may be used by the in-vehicle ITS 420 in order to enable a component of the mobility system 120 to exhibit a corresponding ITS function. Such enabling may be associated with reducing the likelihood of a potential incident that may damage the vehicle 100, the occupants, the road users, or any other sharer of the traffic. Exemplary, the in-vehicle ITS 420 may use the service information elements to trigger the braking mechanism of the mobility system 120 of the in-vehicle ITS 420, or actuate the autonomous driving system of the vehicle 100.

The processor 301 may determine the risk metric of a service providing a corresponding service information element based on a predefined risk category of the service in terms of likelihood for causing a physical damage to the vehicle 100 and/or physical damage by the vehicle 100 in which the potential occurrence of exemplified damages may be due to the service information element (e.g., of the corresponding service) being modified, corrupted, altered, etc. For example, a hacking attempt or an adversarial attack directed to mobile communication device 410 may become successful and thus may perturbate the service information element, causing physical damage when used for operating a relevant ITS function of the in-vehicle ITS 420.

In another instance, the service information element may not be sufficiently accurate to actuate a respective ITS function promptly in order to avoid physical damage. In some examples, the processor 301 may determine a first risk metric representative of a first risk score of a first service provided by the mobile communication device 410. In that case, the mobile communication device 410 may select the first service based on the first risk score, exemplary due to the first risk score representing low-risk. In some aspects, the processor 301 may determine a second risk metric representative of a second risk score of a second service provided by the mobile communication device 410. In such case, the mobile communication device 410 may not select the second service based on the second risk score, exemplary due to the second risk score representing a high-risk, illustratively in view of a threshold.

In some aspects, the processor 301 may not determine a risk metric when the data is originated from an internal trusted source of the ITS of the vehicle 100. The service information elements pertinent to selected services provided by the mobile communication device 410 and/or data originating from internal trusted sources of the ITS of the vehicle 100 may refer to an input data for the in-vehicle ITS 420. The processor 301 may determine, based on the tag information (e.g., the first and second tag information), whether a received data (e.g., the first and second data) is authorized to be provided to the in-vehicle ITS 420 for a relevant ITS component to perform a corresponding ITS function.

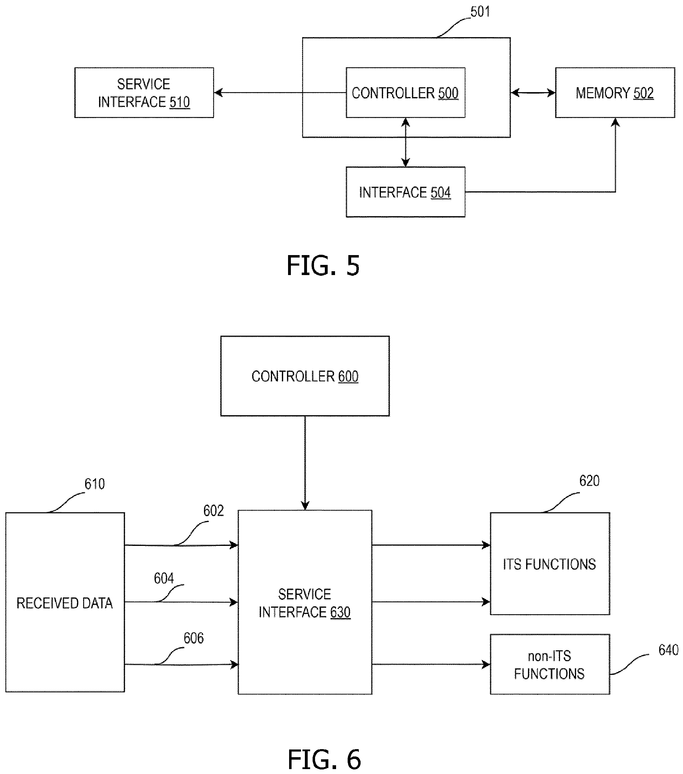

FIG. 5 shows an example of a controller in accordance with various aspects of the disclosure. The controller 500 may orchestrate a data flow for service information elements to an in-vehicle ITS system (e.g., the in-vehicle ITS system 420, the control system 200). A processor 501, such as the processor 301, include the controller 500. In some aspects, the controller 500 may control a service interface 530 to route the received data (i.e., the first service information elements, the second service information elements, etc.) to an ITS function of the in-vehicle ITS 420 as the input data in which the routing of the received data is based on the tag information of the received data.

In accordance with various aspects described herein and referencing to aspects described for the control system, an ITS function may include functions provided by the control system to perform a designated control operation. Illustratively, an ITS function may refer to designated operations performed and/or controlled by a processor of the control system, such as the data acquisition processor 214, the application processor 216, the communication processor 218 to perform a task associated with the control of the vehicle 100. In accordance with various aspects provided herein, an ITS function may perform operations based on provided service information elements and/or information originating from an internal trusted source of the in-vehicle ITS 420. In other words, through an executed ITS function, a processor (e.g. the data acquisition processor 214, the application processor 216, the communication processor 218) may perform operations (e.g. calculations, computations, determinations) based on provided service information elements and/or information originating from an internal trusted source of the in-vehicle ITS 420.

Illustratively, an ITS function may include operations performed by the data acquisition processor 214 to acquire data from the data acquisition devices 112 and determine surroundings of the vehicle 100. Another ITS function may include an operation of the one or more components of the control system 200 to provide instructions to the mobility system 120 to direct the navigation and/or mobility of the vehicle 100. Another ITS function may include an operation involving one or more position devices 114 to determine a position of the vehicle 100. In some examples, an ITS function may include execution of one or more applications and/or programs of vehicle at the application layer.

In this context, one or more processors of the vehicle 100 may be configured to perform operations (e.g. calculations, computations, determinations) that are not related to the ITS 420. These operations may be referred to as non-ITS functions, such as functions that are associated with provision of designated features of an infotainment and/or entertainment system of the vehicle 100.

In that sense, the controller 500 may authorize access of ITS functions of the in-vehicle ITS 420 to the received data such as the service information elements or data originating from an internal trusted source of the in-vehicle ITS 420. The controller 500 may access to an interface 504 (e.g., the interface 304) to receive information from the mobile communication device. The controller may access a memory 502 (e.g., the memory 302) in which the respective tag information and received data are stored. The controller 500 may, based on the tag information, cause the service interface 510 to route the received data to one or more ITS functions of the in-vehicle ITS 420.

FIG. 6 shows an example of routing of a data received 610 from a mobile communication device or from internal trusted sources. Each data described herein may include a first data item as a payload, which the first data item includes service information elements provided by a selected service or information provided by internal trusted sources. The data described herein may further include a tag (i.e. tag information) described in accordance with aspects described for FIG. 4. Illustratively, a memory (e.g. the memory 502) may store information for possible tags, such that first tag information, the second tag information, and the third tag information together with routes to be provided to data including the corresponding tag information.

Illustratively, the controller 600 may analyze each received data to identify the tag, which may be provided to a predefined location within the received data (e.g. first bits). Once the controller 600 identifies the tag within the received data, the controller 600 may route the received data, or the payload of the received data to ITS or non-ITS functions as described herein.

Illustratively, for a first received data including the first tag information, the first data 602 including service information elements of a first service, the controller 600 may route the first received data 602 through the service interface 630 to all ITS functions among the plurality of the ITS functions. In that case, the first tag information may indicate that the service information element of the selected service(s) is authorized to be provided to the any ITS function of the in-vehicle ITS 620.

Illustratively, for a second received data 604 including the second tag information, the controller 600 may route the second received data 604 through the service interface 630 to a subset of the plurality of the ITS functions. In such case, the second tag information may indicate that service information element of only a subset of selected services are authorized to be provided to the in-vehicle ITS 620.

Illustratively, for a third received data 606 including the third tag information, the controller 600 may identify from the third tag information that the third received data is not authorized to be provided to the in-vehicle ITS 620. In that case, the controller 600 may cause the service interface 610 to route the third received data 606 to a non-ITS function 640, such as an infotainment-related function not being a part of the mobility system 120 of the in-vehicle ITS 620 and/or not a safety-related function due to the received data 606 not being a service information element of a service indicative of a safety-related service provided by the mobile communication device 610.

In accordance with the various aspects described herein, the processor 301 may perform a negotiation with the mobile communication device 410. The negotiation may include information about ITS services (e.g., pedestrian detection service, autonomous driving service, etc.) that can be carried out by the mobile communication device 410 and the frequency band of the services executed by the mobile communication device 410. Therefore, the negotiation performed by the processor 301 may cause a bidirectional data transmission between the mobile communication device 410 and the processor 301. In some aspects, the negotiation may include a protocol initiated with receiving information representing the available services provided by the mobile communication device 410. In some aspects, the negotiation may include a protocol initiated with requesting information about the available services provided by the mobile communication device 410.

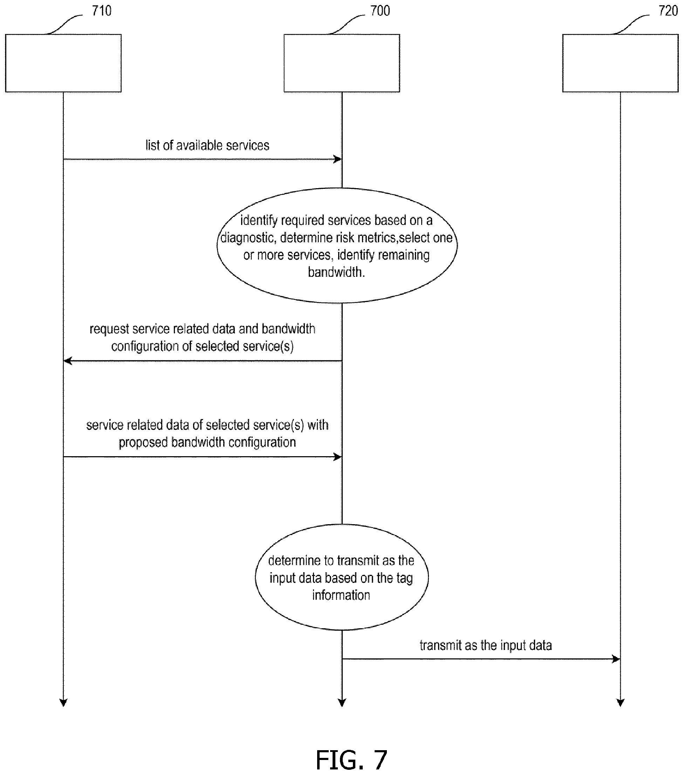

FIG. 7 shows an exemplary illustration of a flow diagram in which a processor 701 of a device 700 (e.g., the processor 301 of the device 300) performs a negotiation with a mobile communication device 710. The mobile communication device 710 may provide a list of available services which can be executed/managed by the mobile communication device 710 to the processor 701. The available services may be associated with the ITS services. The mobile communication device 710 may further request information about the ITS functions executable/manageable by the mobile communication device 710. The processor 701 may decode the information received from the mobile communication device 710. and perform a diagnostic for the ITS functions. The processor 701 may run a diagnostic and determine the functions that cannot be run exemplary due to limited hardware resources or limited bandwidth and may identify one or more functions among those functions that may be executable/manageable by the mobile communication device 710. The processor 701 may identify the required services from the mobile communication device 710.

The processor 701 may further identify the in-use bandwidth and remaining bandwidth capacity in the 5.9 GHz side-link band (i.e., C-V2X band) based on the diagnostic. The processor 701 may further determine a risk metric for one or more available services based on the received data from the mobile communication device 710. The processor 701 may select one or more services from a plurality of available services that may be executable/manageable by the mobile communication device 710.

The processor 701 may request from the mobile communication device 710 service information element of the selected service(s). The request may further include information about the remaining bandwidth in the C-V2X band. The mobile communication device may receive the request 710 and may transmit service information element of selected service(s) and appropriate bandwidth configuration for the selected service(s). In some cases, the bandwidth configuration for a respective selected service may include LTE frequency bands, 4G frequency bands, 5G frequency bands, 2.4 GHz Wi-Fi frequency band, etc. The processor 701 may receive and decode the data including service information element and bandwidth configuration proposed by the mobile communication device 710. The processor 701 may perform tagging to the received data to determine the authorization state of the service information element pertinent to one or more selected services. Based on the tag information, the processor 701 may determine to provide the service information element as the input data to one or more functions of the in-vehicle ITS 720.

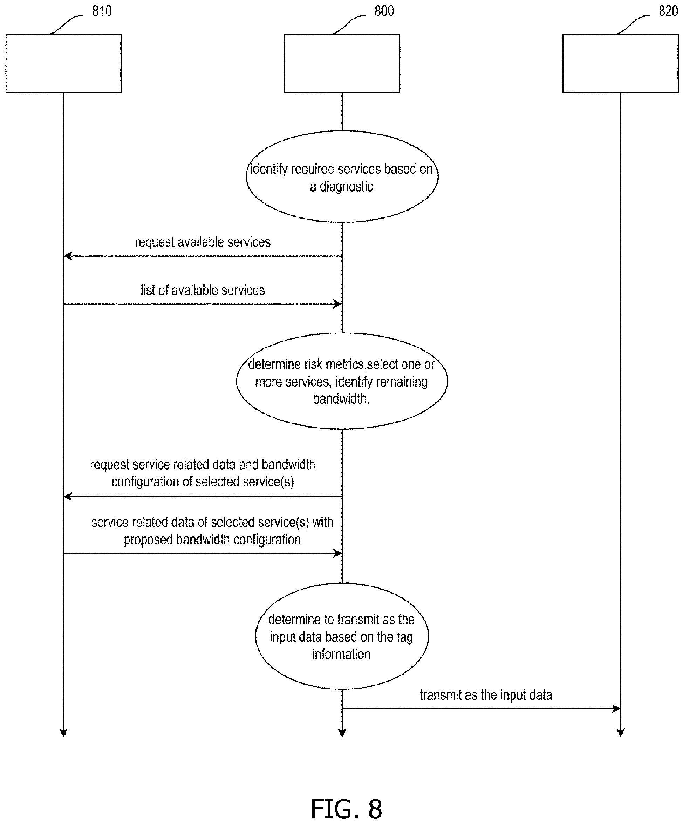

FIG. 8 shows a flow diagram in which a processor 801 of a device 800 (e.g., the processor 301 of the device 300) performs a negotiation with a mobile communication device 810. The processor 801 may run an a-priori diagnostic to identify required services from a mobile communication device 810. The a-priori diagnostic may refer to an operation performed to identify one or more ITS-related services that may be executable/manageable by the mobile communication device 810 prior to receiving available services provided by the mobile communication device 810. The processor 801 may request available services from the mobile communication device 810. The mobile communication device 810 may transmit a list of the available services that can be managed by the mobile communication device 810. The processor 801 may receive and decode the data to identify the available services and may determine a risk metric for one or more available services. The processor 801 may select one or more services from the available services. The 801 processor may further determine the remaining C-V2X bandwidth.

The processor 801 may request from the mobile communication device 810 service information element of the selected service(s). The request may further include information about the remaining bandwidth in the C-V2X band. The mobile communication device 810 may receive the request 810 and may transmit service information element of selected service(s) and appropriate bandwidth configuration for the selected service(s). The processor 801 may receive and decode the data including service information element and bandwidth configuration proposed by the mobile communication device 810. The processor 801 may perform tagging to the received data to determine the authorization state of the service information element pertinent to one or more selected services. Based on the tag information, the processor 801 may determine to provide the service information element as the input data to one or more functions of the in-vehicle ITS 820.

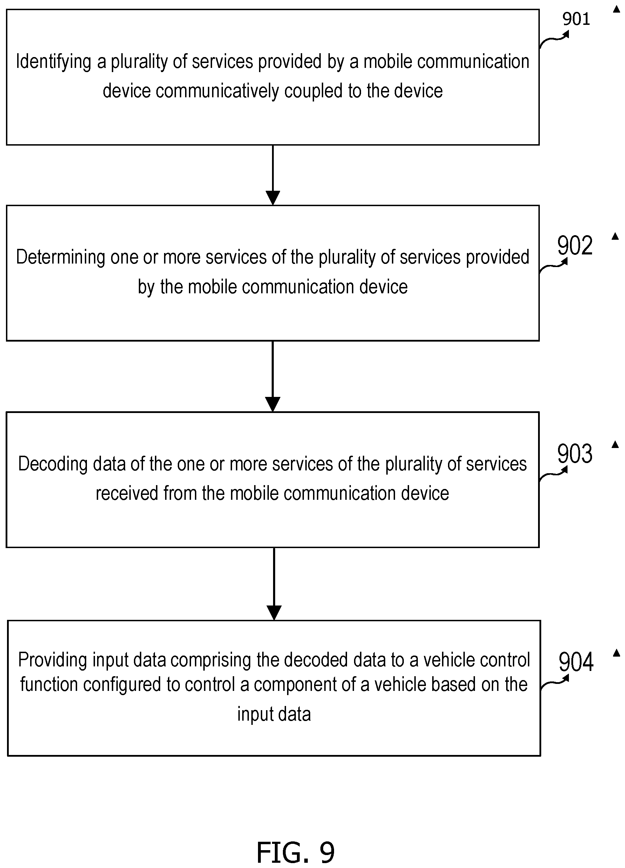

FIG. 9 shows an example of a method. The method may include identifying 901 information representative of a plurality of services provided by a mobile communication device; selecting 902 one or more services from the plurality of services provided by the mobile communication device; obtaining 903 data of the one or more services received from the mobile communication device; instructing 904 an intelligent transportation system (ITS) of a vehicle to use the data of the one or more services.

The following examples pertain to further aspects of this disclosure.

In example 1, the subject matter includes a device for a vehicle, the device including a processor configured to: identify information representative of a plurality of services provided by a mobile communication device; select one or more services from the plurality of services provided by the mobile communication device; obtain data of the one or more services received from the mobile communication device; instruct an intelligent transportation system (ITS) of the vehicle to use the data of the one or more services.

In example 2, the subject matter of example 1, wherein the processor is further configured to tag the data of the one or more services with tag information; wherein the tag information represents that the data is received from the mobile communication device.

In example 3, the subject matter of example 2, wherein the tag information includes one or two bits.

In example 4, the subject matter of example 3, wherein the tag information further includes information representative of at least one of: an identifier of the mobile communication device; a location of the vehicle; a time of the day; a date; and/or a weather condition.

In example 5, the subject matter of any one of examples 1 to 4, wherein the processor is further configured to select the one or more services based on running ITS functions of the ITS; wherein the processor is further configured to identify input data requirements of the running ITS functions and select the one or more services based on the identified input data requirements.

In example 6, the subject matter of any one of examples 1 to 5, wherein the processor is further configured to determine a risk metric for a service of the plurality of services provided by the mobile communication device; wherein the risk metric is indicative of at least one of a risk of a physical damage of the vehicle or a risk of a physical damage by the vehicle.

In example 7, the subject matter of any one of examples 2 to 6, wherein the data of the one or more services is a first data and the tag information is the first tag information; wherein the processor is further configured obtain second data of one or more further services of the plurality of services; wherein the processor is configured to tag the second with second tag information different from the first tag information.

In example 8, the subject matter of example 7, wherein the processor is further configured to perform a plurality of ITS functions of the ITS, each ITS function of the plurality of ITS functions is configured to provide a plurality of services by processing a corresponding input data; wherein the processor is configured to determine whether a received data including the first data or the second data is authorized to be provided as input data of an ITS function of the plurality of ITS functions based on the tag information within the received data.

In example 9, the subject matter of example 8, wherein one or more ITS functions of the plurality of ITS functions are configured to process third data including third tag information; wherein the third tag information represents that an origin of the third data is a vehicle-internal trusted data source.

In example 10, the subject matter of example 8 or example 9, wherein the first tag information represents that the first data is authorized to be provided to any ITS function of the plurality of ITS functions; wherein the second tag information represents that the second data is authorized to be provided only one or more ITS functions of the plurality of ITS functions.

In example 11, the subject matter of any one of examples 1 to 10, wherein the processor is further configured to decode data received from the mobile communication device to obtain the information representative of the plurality of services provided by the mobile communication device. wherein the processor is further configured to encode a request for the information representative of the plurality of services provided by the mobile communication device.

In example 12, the subject matter of any one of examples 1 to 11, wherein the processor is further configured to perform a negotiation with the mobile communication device to select the one or more services; wherein the negotiation includes a determination of frequency bands for the selected one or more services of the plurality of services provided by the mobile communication device.

In example 13, the subject matter of example 12, wherein the frequency bands include at least one of ITS frequency bands, LTE frequency bands, and/or 5G/NR frequency bands.

In example 14, a vehicle including: the apparatus of any one of examples 1 to 13; the ITS; a communication interface configured to communicate with the mobile communication device.

In example 15, the vehicle of example 14, may further include a mobility system including components related to steering and movement of the vehicle.

In example 16, a device including a processor configured to: identify a plurality of services provided by a mobile communication device communicatively coupled to the device; determine one or more services of the plurality of services provided by the mobile communication device; decode data of the one or more services of the plurality of services received from the mobile communication device; provide input data including the decoded data to a vehicle control function configured to control a component of a vehicle based on the input data.

In example 17, the subject matter of example 16, wherein the device is further configured to perform aspects described in any one of examples 1 to 15.

In example 18, the subject matter includes a method for a vehicle, the method including: identifying information representative of a plurality of services provided by a mobile communication device; selecting one or more services from the plurality of services provided by the mobile communication device; obtaining data of the one or more services received from the mobile communication device; instructing an intelligent transportation system (ITS) of the vehicle to use the data of the one or more services.

In example 19, the subject matter of example 18, may further include tagging the data of the one or more services with tag information; wherein the tag information represents that the data is received from the mobile communication device.

In example 20, the subject matter of example 19, wherein the tag information includes one or two bits.

In example 21, the subject matter of example 20, wherein the tag information further includes information representative of at least one of: an identifier of the mobile communication device; a location of the vehicle; a time of the day; a date; and/or a weather condition.

In example 22, the subject matter of any one of examples 18 to 21, may further include selecting the one or more services based on running ITS functions of the ITS; identifying input data requirements of the running ITS functions and select the one or more services based on the identified input data requirements.

In example 23, the subject matter of any one of examples 18 to 22, determining a risk metric for a service of the plurality of services provided by the mobile communication device; wherein the risk metric is indicative of at least one of a risk of a physical damage of the vehicle or a risk of a physical damage by the vehicle.

In example 24, the subject matter of any one of examples 19 to 23, wherein the data of the one or more services is a first data and the tag information is the first tag information; wherein the method includes obtaining second data of one or more further services of the plurality of services; tagging the second with second tag information different from the first tag information.

In example 25, the subject matter of example 24, may further include performing a plurality of ITS functions of the ITS, each ITS function of the plurality of ITS functions is configured to provide a plurality of services by processing a corresponding input data; determining whether a received data including the first data or the second data is authorized to be provided as input data of an ITS function of the plurality of ITS functions based on the tag information within the received data.

In example 26, the subject matter of example 25, wherein one or more ITS functions of the plurality of ITS functions are configured to process third data including third tag information; wherein the third tag information represents that an origin of the third data is a vehicle-internal trusted data source.

In example 27, the subject matter of example 25 or example 26, wherein the first tag information represents that the first data is authorized to be provided to any ITS function of the plurality of ITS functions; wherein the second tag information represents that the second data is authorized to be provided only one or more ITS functions of the plurality of ITS functions.

In example 28, the subject matter of any one of examples 18 to 27, may further include decoding data received from the mobile communication device to obtain the information representative of the plurality of services provided by the mobile communication device. encoding a request for the information representative of the plurality of services provided by the mobile communication device.

In example 29, the subject matter of any one of examples 18 to 28, may further include performing a negotiation with the mobile communication device to select the one or more services; wherein the negotiation includes a determination of frequency bands for the selected one or more services of the plurality of services provided by the mobile communication device.

In example 30, the subject matter of example 29, wherein the frequency bands include at least one of ITS frequency bands, LTE frequency bands, and/or 5G/NR frequency bands.

In example 31, a method including: identifying a plurality of services provided by a mobile communication device communicatively coupled to the device; determining one or more services of the plurality of services provided by the mobile communication device; decoding data of the one or more services of the plurality of services received from the mobile communication device; providing input data including the decoded data to a vehicle control function configured to control a component of a vehicle based on the input data.

In example 32, the subject matter of example 31, wherein the method further includes aspects described in in any one of examples 19 to 30.

In example 33, a non-transitory computer-readable medium including instructions which, if executed by a processor, cause the processor to perform any one of the methods of examples 18 to 32.

The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

In the context of this disclosure, the term "process" may be used, for example, to indicate a method. Illustratively, any process described herein may be implemented as a method (e.g., a channel estimation process may be understood as a channel estimation method). Any process described herein may be implemented as a non-transitory computer readable medium including instructions configured, when executed, to cause one or more processors to carry out the process (e.g., to carry out the method).

Throughout the drawings, it should be noted that like reference numbers are used to depict the same or similar elements, features, and structures, unless otherwise noted. It should be noted that certain components may be omitted for the sake of simplicity. It should be noted that nodes (dots) are provided to identify the circuit line intersections in the drawings including electronic circuit diagrams.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

As used herein, a signal or information that is "indicative of", "representative", "representing", or "indicating" a value or other information may be a digital or analog signal that encodes or otherwise, communicates the value or other information in a manner that can be decoded by and/or cause a responsive action in a component receiving the signal. The signal may be stored or buffered in computer-readable storage medium prior to its receipt by the receiving component and the receiving component may retrieve the signal from the storage medium. Further, a "value" that is "indicative of "or "representative" some quantity, state, or parameter may be physically embodied as a digital signal, an analog signal, or stored bits that encode or otherwise communicate the value.

As used herein, a signal may be transmitted or conducted through a signal chain in which the signal is processed to change characteristics such as phase, amplitude, frequency, and so on. The signal may be referred to as the same signal even as such characteristics are adapted. In general, so long as a signal continues to encode the same information, the signal may be considered as the same signal. For example, a transmit signal may be considered as referring to the transmit signal in baseband, intermediate, and radio frequencies.

The terms "processor" or "controller" as, for example, used herein may be understood as any kind of technological entity that allows handling of data. The data may be handled according to one or more specific functions executed by the processor. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The terms "one or more processors" is intended to refer to a processor or a controller. The one or more processors may include one processor or a plurality of processors. The terms are simply used as an alternative to the "processor" or "controller".

The term "user device" is intended to refer to a device of a user (e.g. occupant) that may be configured to provide information related to the user. The user device may exemplarily include a mobile phone, a smart phone, a wearable device (e.g. smart watch, smart wristband), a computer, etc.

As utilized herein, terms "module", "component," "system," "circuit," "element," "slice," " circuit," and the like are intended to refer to a set of one or more electronic components, a computer-related entity, hardware, software (e.g., in execution), and/or firmware. For example, circuit or a similar term can be a processor, a process running on a processor, a controller, an object, an executable program, a storage device, and/or a computer with a processing device. By way of illustration, an application running on a server and the server can also be circuit. One or more circuits can reside within the same circuit, and circuit can be localized on one computer and/or distributed between two or more computers. A set of elements or a set of other circuits can be described herein, in which the term "set" can be interpreted as "one or more".

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art. The term "data item" may include data or a portion of data.

It will be understood that when an element is referred to as being "connected" or "coupled" to another element, it can be physically connected or coupled to the other element such that current and/or electromagnetic radiation (e.g., a signal) can flow along a conductive path formed by the elements. Inherently, such element is connectable or couplable to the another element. Intervening conductive, inductive, or capacitive elements may be present between the element and the other element when the elements are described as being coupled or connected to one another. Further, when coupled or connected to one another, one element may be capable of inducing a voltage or current flow or propagation of an electro-magnetic wave in the other element without physical contact or intervening components. Further, when a voltage, current, or signal is referred to as being "provided" to an element, the voltage, current, or signal may be conducted to the element by way of a physical connection or by way of capacitive, electro-magnetic, or inductive coupling that does not involve a physical connection.

Unless explicitly specified, the term "instance of time" refers to a time of a particular event or situation according to the context. The instance of time may refer to an instantaneous point in time, or to a period of time which the particular event or situation relates to.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission

(e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

While the above descriptions and connected figures may depict electronic device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method. All acronyms defined in the above description additionally hold in all claims included herein.

All acronyms defined in the above description additionally hold in all claims included herein.

## Claims

1. A device for a vehicle, the device comprising a processor configured to:
identify information representative of a plurality of services provided by a mobile communication device;
select one or more services from the plurality of services provided by the mobile communication device;
obtain data of the one or more services received from the mobile communication device; and
instruct an intelligent transportation system (ITS) of the vehicle to use the data of the one or more services.

2. The device of claim 1,
wherein the processor is further configured to tag the data of the one or more services with tag information; and
wherein the tag information represents that the data is received from the mobile communication device.

3. The device of claim 2,
wherein the tag information comprises one or two bits.

4. The device of claim 3,
wherein the tag information is complemented by information representative of at least one of: an identifier of the mobile communication device; a location of the vehicle; a time of the day; a date; and/or a weather condition.

5. The device of any one of claims 1 to 4,
wherein the processor is further configured to select the one or more services based on running ITS functions of the ITS; and
wherein the processor is further configured to identify input data requirements of the running ITS functions and select the one or more services based on the identified input data requirements.

6. The device of any one of claims 1 to 5,
wherein the processor is further configured to determine a risk metric for a service of the plurality of services provided by the mobile communication device; and
wherein the risk metric is indicative of at least one of a risk of a physical damage of the vehicle or a risk of a physical damage by the vehicle.

7. The device of any one of claims 2 to 6,
wherein the data of the one or more services is a first data and the tag information is the first tag information;
wherein the processor is further configured obtain second data of one or more further services of the plurality of services;
wherein the processor is configured to tag the second data with second tag information different from the first tag information.

8. The device of claim 7,
wherein the processor is further configured to perform a plurality of ITS functions of the ITS, each ITS function of the plurality of ITS functions is configured to provide a plurality of services by processing a corresponding input data;
wherein the processor is configured to determine whether a received data including the first data or the second data is authorized to be provided as input data of an ITS function of the plurality of ITS functions based on the tag information within the received data.

9. The device of any one of claims 1 to 8,
wherein one or more ITS functions of the plurality of ITS functions are configured to process third data comprising third tag information;
wherein the third tag information represents that an origin of the third data is a vehicle-internal trusted data source.

10. The device of any one of claims 1 to 9,
wherein the plurality of services provided by the mobile communication device comprises at least one of services that are used by a component of the ITS and/or services that are used by the ITS to operate the vehicle.

11. The device of any one of claims 1 to 10,
wherein the processor is further configured to perform a negotiation with the mobile communication device to select the one or more services;
wherein the negotiation comprises a determination of frequency bands for the selected one or more services of the plurality of services provided by the mobile communication device.

12. The device of claim 11,
wherein the frequency bands comprise at least one of ITS frequency bands, LTE frequency bands, and/or 5G/NR frequency bands.

13. A vehicle comprising:
the device of any one of claims 1 to 12;
the ITS;
a communication interface configured to communicate with the mobile communication device.

14. A method for a vehicle, the method comprising:
identifying information representative of a plurality of services provided by a mobile communication device;
selecting one or more services from the plurality of services provided by the mobile communication device;
obtaining data of the one or more services received from the mobile communication device;
instructing an intelligent transportation system (ITS) of the vehicle to use the data of the one or more services.

15. A non-transitory computer-readable medium comprising one or more instructions which, if executed by a processor of a vehicle, perform the method of claim 14.
